# EUROPEAN PATENT SPECIFICATION

(11) **EP 1 519 297 B1**
(45) Date of publication and mention of the grant of the patent: **11.02.2009**
(21) Application number: 04022756.3
(22) Date of filing: 24.09.2004
(51) Int. Cl.: G06K 7/00, G06K 13/08

(54) **An IC card processor**
IC-Kartenprozessor
Pocesseur pour carte à puce

(30) Priority: 26.09.2003 JP 2003336157
(43) Date of publication of application: 30.03.2005
(73) Proprietor: Hitachi-Omron Terminal Solutions, Corp., Tokyo (JP)
(72) Inventor: Tadasama, Akihiro, Shiokoji-dori Shimogyo-ku Kyoto-shi (JP)
(74) Representative: Käck, Jürgen

(56) References cited:
- JP-A- 63 015 384

## Description

### BACKGROUND OF THE INVENTION

### Technical Field

The present invention relates to an IC card processor, which performs processing of reading or writing information from or into an IC card comprising an IC contact.

### Related Prior Art

Among IC card processors for processing an IC card comprising an IC contact and an IC chip, there is an IC card processor where an IC contact block as a device for reading or writing information is brought into contact with an IC contact on the surface of an IC card entering the inside of the body after being inserted from an insertion slot, to read or write information from or into the IC card. In the conventional practice of this IC card processor, even when a card other than an IC card or an extraneous object enters the body inside from the insertion slot, the IC contact block is driven to be brought into contact with the surface of such a card or extraneous object or to turn an electricity on for communicating with them. This has caused a problem of shortening the lives of the IC contact block and a circuit to drive the IC contact block, or a problem of wearing out the IC contact block. In order to solve these problems, a technique for processing an IC card only when it is inserted or a technique relevant thereto is described in Japanese Laid-Open Patent Publication No. Hei 6-266910, Japanese Laid-Open Patent Publication No. Sho 64-37687, Japanese Laid-Open Patent Publication No. Hei 10-21353, Japanese Laid-Open Patent Publication No. Hei 8-30736, Japanese Patent Publication No. 2753672 and Japanese Unexamined Utility Model Publication No. Hei 1-97488.

In Japanese Laid-Open Patent Publication No. Hei 6-266910, when a card is inserted into an insertion slot of a card processor, while the card is carried by a roller into the body inside, an IC card recognition sensor, comprising a metal detection sensor and disposed in proximity to the insertion slot, determines whether or not the card comprises metal, namely an IC having lead wires or the like or an external terminal. Only when the IC card recognition sensor detects that the card comprises metal, the inserted card is determined as an IC card, and an IC card block is brought into contact with the surface of the card to process information to and from the card. In Japanese Laid-Open Patent Publication No. Sho 64-37687, when a sensor detects insertion of a card into an insertion slot of a card processor, a stopper for blocking insertion of a card is opened and the card is carried by a roller into the body inside, and in carrying the card, the presence or absence of an IC chip in the card is detected based on variations in electric capacitance between capacitor electrode plates, each disposed on a card carrier path, when the card passes through between those electrode plates. Only when the presence of an IC chip in the card is detected, an IC contact block is brought into contact with the surface of the card to process information to and from the card. In Japanese Laid-Open Patent Publication No. Hei 10-21353, when insertion of a card into an insertion slot of a card processor is detected, a shutter closing the insertion slot opens and the card is carried by a roller into the body inside, and in carrying the card, an oscillation of a blocking oscillator, which is disposed at a prescribed distance from the card carrier path, stops due to an electromagnetic coupling of a detection coil of the blocking oscillator and a metallic IC contact of the card, whereby the presence or absence of an IC in an appropriate position of the inserted card is detected. Only when the presence of the IC in an appropriate position of the card is detected, the IC contact block is brought into contact with the surface of the card to process information to and from the card.

In Japanese Laid-Open Patent Publication No. Hei 8-30736 and Japanese Patent Publication No. 2753672, when a sensor detects insertion of a card into an insertion slot of a card processor, a device of detecting variations in magnetic field detects variations in magnetic field being generated in proximity to the insertion slot, and it is thereby possible to determine the kind of inserted card. (In Japanese Patent Publication No. 2753672, the magnetic field is generated by a magnet, and the variations in magnetic field are detected using a Hall element.) Specifically, when the inserted card is a magnetic card, a magnetic field varies according to a magnetic coating on the magnetic card whereas, when the inserted card is an IC card, a magnetic field does not vary; therefore, the kind of card is determined by the presence or absence of variations in magnetic field. Only when the inserted card is determined as an IC card, a shutter for preventing a card from entering the inside of the body is opened and the card is carried by a roller to a position to process an IC card in the body inside, where an IC contact block is brought into contact with the surface of the card to process information to and from the card. In Japanese Unexamined Utility Model Publication No. Hei 1-97488, since insertion of an extraneous object into the body inside of a card processor may cause a breakdown of the processor, a shutter for blocking an insertion slot and a card detection system are disposed in proximity to the insertion slot of the card processor in order to prevent insertion of an extraneous object. Only when an object having the same width as that of the card is inserted into the insertion slot, the card detection system is driven to open the shutter, and the card is carried by a belt into the body inside so that information processing is performed.

### DISCLOSURE OF THE INVENTION

As thus described, in Japanese Laid-Open Patent Publication No. Hei 6-266910, Japanese Laid-Open Patent Publication No. Sho 64-37687, Japanese Laid-Open Patent Publication No. Hei 10-21353, Japanese Laid-Open Patent Publication No. Hei 8-30736 and Japanese Patent Publication No. 2753672, an IC contact block is driven to process information to and from an IC card only when a card inserted into an insertion slot is determined as an IC card. In Japanese Laid-Open Patent Publication No. Hei 6-266910, Japanese Laid-Open Patent Publication No. Sho 64-37687 and Japanese Laid-Open Patent Publication No. Hei 10-21353, however, since the determination as to whether the card inserted into the insertion slot is an IC card or not is made after the card inserted into the inserted slot has been carried into the body inside, there is the possibility that an extraneous object other than an IC card may enter the body inside to clog or damage other parts inside the body. In Japanese Laid-Open Patent Publication No. Hei 6-266910, in particular, since the determination as to whether the card is an IC card or not is made on the basis of the presence or absence of metal in the card, an inserted extraneous object may be determined as an IC card and processing for an IC card may be performed when the extraneous object is a metallic plate or the like having a similar characteristic to that of a metal, such as copper or gold, included in an IC chip or an IC contact on an IC card, thereby leading to destruction of the IC contact block, the internal circuit or the like. As opposed to this, in Japanese Laid-Open Patent Publication No. Hei 8-30736 and Japanese Patent Publication No. 2753672, although the determination as to whether a card inserted into the insertion slot is an IC card or not is made before the shutter is opened to allow the card to be carried into the body inside, any inserted card is determined as an IC card when a magnetic field in proximity to the insertion slot does not change as much as the case of insertion of a magnetic card, and therefore, when an extraneous object, comprising a metal plate having a similar characteristic to that of a metal included in an IC chip or an IC contact on an IC card, is inserted, the extraneous object is erroneously determined as an IC card and carried into the body inside, which may cause the similar problems to those of Japanese Laid-Open Patent Publication No. Hei 6-266910, Japanese Laid-Open Patent Publication No. Sho 64-37687 and Japanese Laid-Open Patent Publication No. Hei 10-21353 described above. On the other hand, in Japanese Unexamined Utility Model Publication No. Hei 1-97488, although the shutter is opened only when an object having the same width as that of the card is inserted into the insertion slot, the shutter is also opened when a card different from an IC card but having the same width as that of the IC card, or an extraneous object, is inserted into the body inside, and such a different card or extraneous object enters the body inside, which may cause the similar problems to those of Japanese Laid-Open Patent Publication No. Hei 6-266910, Japanese Laid-Open Patent Publication No. Sho 64-37687 and Japanese Laid-Open Patent Publication No. Hei 10-21353 described above. JP 63 015 384 discloses a further prior art IC card processor according to the preamble of claim 1.

The present invention is directed to solving the above problems, and an object of the present invention is to process an IC card only when an IC card is inserted, and also to provide an IC card processor capable of preventing entry of an extraneous object.

In the present invention, these objects are solved by an IC card processor according to claim 1.

With the above configuration, since an IC card is provided with an IC contact of a prescribed size at a prescribed position, upon insertion of an IC card into the insertion slot, the IC contact detection device alternately shifts between an IC contact non-detecting state and an IC contact detecting state at a prescribed timing, and consequently it is possible to determine that an IC card has been inserted into the insertion slot. Further, when a card other than an IC card or an extraneous object is inserted into the insertion slot, the IC contact detection device does not alternately shift between the IC contact non-detecting state and the IC contact detecting state at a prescribed timing, unlike when an IC card is inserted, and a determination can therefore be made that an IC card has not been inserted into the insertion slot. Accordingly, since only an IC card is allowed to enter the body inside by releasing control by the control device over entry of an IC card when insertion of an IC card is determined, it is possible to process an IC card by the reading/writing device only when an IC card is inserted into the insertion slot, and also to prevent entry of an extraneous object from the insertion slot into the body inside.

Moreover, in the embodiment of the present invention, the determination device determines that an IC card has been inserted into the insertion slot in the case where the IC contact detection device shifts from the IC contact non-detecting state to the IC contact detecting state, and then shifts back to the non-detecting state. In this manner, when an IC card is inserted into the insertion slot, the IC contact detection device detects the IC contact on the IC card to take the detecting state at a prescribed timing, and subsequently stops detecting the IC contact to take the non-detecting state at a prescribed timing, whereby it is possible to determine that the IC card has been inserted.
Further, when a card other than an IC card or an extraneous object is inserted, the IC contact detection device does not take the detecting state at a prescribed timing or does not take the non-detecting state at a prescribed timing, whereby it is possible to determine that an IC card has not been inserted into the insertion slot.

In another embodiment of the present invention, in addition to the above-described configuration, a width detection device is disposed which detects the presence or absence of an object having a prescribed width in proximity to the insertion slot, and the determination device determines whether an IC card has been inserted into the insertion slot or not, on the basis of temporal variations in respective detecting states of the IC contact detection device and the width detection device. More specifically, when the IC contact detection device and the width detection device are disposed in an insertion section where the insertion slot is formed, in the direction of inserting the IC card without an interval between the two devices, or disposed respectively on the front side and the back side in the direction of inserting the IC card at an interval smaller than the distance from the front end of the IC card to the IC contact on the IC card in the direction of inserting the IC card, the determination device determines that an IC card has been inserted into the insertion slot in the case where the width detection device takes the state of detecting an object having a prescribed width, and then the IC contact detection device takes the IC contact detecting state. In such a manner, when an IC card is inserted into the insertion slot, the width detection device detects the IC card to take the detecting state at a prescribed timing and then the IC contact detection device detects the IC contact on the IC card to take the detecting state at a prescribed timing, and the insertion of the IC card into the insertion slot can thereby be determined. Further, in the case where a card other than an IC card or an extraneous object is inserted, even when the width detection device detects a card other than an IC card or an extraneous object to take the detecting state at a prescribed timing, the IC contact detection device does not take the detecting state at a prescribed timing later than the prescribed timing at which the width detection device takes the detecting state, and insertion of no IC card into the insertion slot can thereby be determined.

Additionally to the above embodiment, insertion of an IC card into the insertion slot may be determined in the case where the width detection device takes the state of detecting an object having a prescribed width while the IC contact detection device takes the IC contact detecting state, and then the IC contact detection device takes the IC contact non-detecting state while the width detection device maintains the state of detecting an object having a prescribed width. In such a manner, when the IC card is inserted into the insertion slot, the width detection device detects the IC card to take the detecting state while the IC contact detection device detects the IC contact on the IC card to take the detecting state, and then the IC contact detection device stops detecting the IC contact to take the non-detecting state at a prescribed timing while the width detection device maintains the detecting state, and insertion of an IC card into the insertion slot can thereby be determined. Further, in the case where a card other than an IC card or an extraneous object is inserted into the insertion slot, even when the width detection device detects such a card other than an IC card or an extraneous object to take the detecting state, the IC contact detection device does not take the detecting state, or even when the width detection device takes the detecting state while the IC contact detection device takes the detecting state, the IC contact non-detecting does not take the non-detecting state at a prescribed timing while the width detection device maintains the detecting state, wherein insertion of no IC card into the insertion slot can thereby be determined.

In another embodiment of the present invention, the IC contact detection device is disposed in such a position as to detect the end of an IC contact which is most distant from the center line of an IC card parallel to the direction of inserting the IC card, when the IC card is inserted into the insertion slot in an orientation allowing the surface of the IC card with the IC contact appearing thereon to face the reading/writing device, and also in such a position as to detect the end of the IC contact which is least distant from the center line when the IC card is inserted into the insertion slot in an orientation allowing the rear surface of the IC card with the IC contact not appearing thereon to face the reading/writing device. In this manner, since the IC contact detection device alternately shifts between the IC contact non-detecting state and the IC contact detecting state at a prescribed timing when an IC card is inserted into the insertion slot in an orientation allowing the surface of the IC card to face the reading/writing device, insertion of an IC card into the insertion slot can be determined, and as a result, control by the control device over entry of an IC card is released so that the IC card can be processed by the reading/writing device. Further, since the IC contact detection device does not shift between the IC contact non-detecting state and the IC contact detecting state at a predetermined timing, unlike the above-described case of the insertion of the IC card with the surface thereof facing to the reading/writing device, when the IC card is inserted into the insertion slot in an orientation allowing the rear surface of the IC card to face the reading/writing device, insertion of an IC card into the insertion slot cannot be determined, and as a result, control by the control device over entry of an IC card is not released and the IC card is not processed by the reading/writing device.

In another embodiment of the present invention, the IC contact detection device is disposed in such a position as to detect an IC contact when an IC card is inserted from the closer end thereof to the IC contact into the insertion slot, and also in such a position as not to detect the IC contact when the IC card is inserted from the farther end thereof to the IC contact into the insertion slot. With this configuration, since the IC contact detection device shifts between the IC contact non-detecting state and the IC contact detecting state at a prescribed timing when an IC card is inserted from the closer end thereof to the IC contact into the insertion slot, insertion of an IC card into the insertion slot can be determined, and as a result, control by the control device over entry of an IC card is released so that the IC card can be processed by the reading/writing device. Further, since the IC contact detection device does not shift between the IC contact non-detecting state and the IC contact detecting state at a predetermined timing, unlike the above-described case of the insertion of the IC card from the closer end thereof to the IC contact, when the IC card is inserted into the insertion slot from the farther end thereof to the IC contact, insertion of an IC card into the insertion slot cannot be determined, and as a result, control by the control device over entry of an IC card is not released and the IC card is not processed by the reading/writing device.

Furthermore, in another embodiment of the present invention, the IC contact detection device is disposed in such a position that the shortest distance to an IC contact is the range of detecting the IC contact when an IC card is inserted into the insertion slot in an orientation allowing the surface of the IC card with the IC contact appearing thereon to face the reading/writing device, and also in such a position that the shortest distance to the IC contact is out of the range of detecting the IC contact when the IC card is inserted into the insertion slot in an orientation allowing the rear surface of the IC card with the IC contact not appearing thereon to face the reading/writing device. In the above-described manner, since the IC contact detection device alternately shifts between the IC contact non-detecting state and the IC contact detecting state at a prescribed timing when an IC card is inserted into the insertion slot in an orientation allowing the surface of the IC card to face the reading/writing device, insertion of an IC card into the insertion slot can be determined, and as a result, control by the control device over entry of an IC card is released so that the IC card can be processed by the reading/writing device. Further, since the IC contact detection device does not shift between the IC contact non-detecting state and the IC contact detecting state at a predetermined timing, unlike the above-described case of the insertion of the IC card with the surface thereof facing to the reading/writing device, when the IC card is inserted into the insertion slot in an orientation allowing the rear surface of the IC card to face the reading/writing device, insertion of an IC card into the insertion slot cannot be determined, and as a result, control by the control device over entry of an IC card is not released and the IC card is not processed by the reading/writing device.

According to the present invention, insertion of an IC card can be determined when the IC card is inserted into the insertion slot on the basis of temporal variations in detecting state of the IC contact detection device for detecting the presence or absence of an IC contact in proximity to the insertion slot, and insertion of no IC card can be determined when a card other than an IC card or an extraneous object is inserted into the insertion slot; therefore, an IC card can be processed only when an IC card is inserted into the insertion slot by releasing control by the control device over entry of an IC card upon determination that the IC card has been inserted, and entry of an extraneous object from the insertion slot into the body inside can be prevented.

### BRIEF DESCRIPTION OF THE DRAWINGS

Fig.1 shows a side view schematically illustrating a configuration of the inside of an IC card processor.
Fig. 2 shows plan view schematically illustrating a configuration of the inside of an IC card processor.
Fig. 3 shows a view schematically illustrating an IC card.
Fig. 4 shows a block diagram showing an electric configuration of an IC card processor.
Fig. 5 shows a flowchart showing basic operational steps of an IC card processor.
Fig. 6 shows a flowchart of a first embodiment.
Fig. 7 shows a view illustrating the inserting state of an IC card in the first embodiment.
Fig. 8 shows a view illustrating the inserting state of a non-compliant card or an extraneous object in the first embodiment.
Fig. 9 shows a diagram showing the detecting state of an IC contact detection sensor in the first embodiment.
Fig. 10 shows a diagram showing the detecting state of the IC contact detection sensor in the first embodiment.
Fig. 11 shows a diagram showing the detecting state of the IC contact detection sensor in the first embodiment.
Fig. 12 shows a view illustrating the inserting state of an IC card in a second embodiment.
Fig. 13 shows a view illustrating the inserting state of the IC card in the second embodiment.
Fig. 14 shows a view illustrating the inserting state of the IC card in the second embodiment.
Fig. 15 shows a view illustrating the inserting state of the IC card in the second embodiment.
Fig. 16 shows a diagram showing the detecting state of an IC contact detection sensor in the second embodiment.
Fig. 17 shows a diagram showing the detecting state of the IC contact detection sensor in the second embodiment.
Fig. 18 shows a diagram showing the detecting state of the IC contact detection sensor in the second embodiment.
Fig. 19 shows a view illustrating an IC contact detection sensor in a third embodiment.
Fig. 20 shows a view illustrating the IC contact detection sensor in the third embodiment.
Fig. 21 shows a flowchart of a fourth embodiment.
Fig. 22 shows a view illustrating the inserting state of an IC card in the fourth embodiment.
Fig. 23 shows a view illustrating the inserting state of a non-compliant card or an extraneous object in the fourth embodiment.
Fig. 24 shows a diagram showing the detecting state of an IC contact detection sensor in the fourth embodiment.
Fig. 25 shows a diagram showing the detecting state of the IC contact detection sensor in the fourth embodiment.
Fig. 26 shows a diagram showing the detecting state of the IC contact detection sensor in the fourth embodiment.
Fig. 27 shows a view illustrating the inserting state of an IC card in a fifth embodiment.
Fig. 28 shows a diagram showing the detecting state of an IC contact detection sensor in the fifth embodiment.
Fig. 29 shows a flowchart of a sixth embodiment.
Fig. 30 shows a view illustrating the inserting state of an IC card in the sixth embodiment.
Fig. 31 shows a diagram showing the detecting state of an IC contact detection sensor in the sixth embodiment.

### DESCRIPTION OF THE PREFERRED EMBODIMENTS

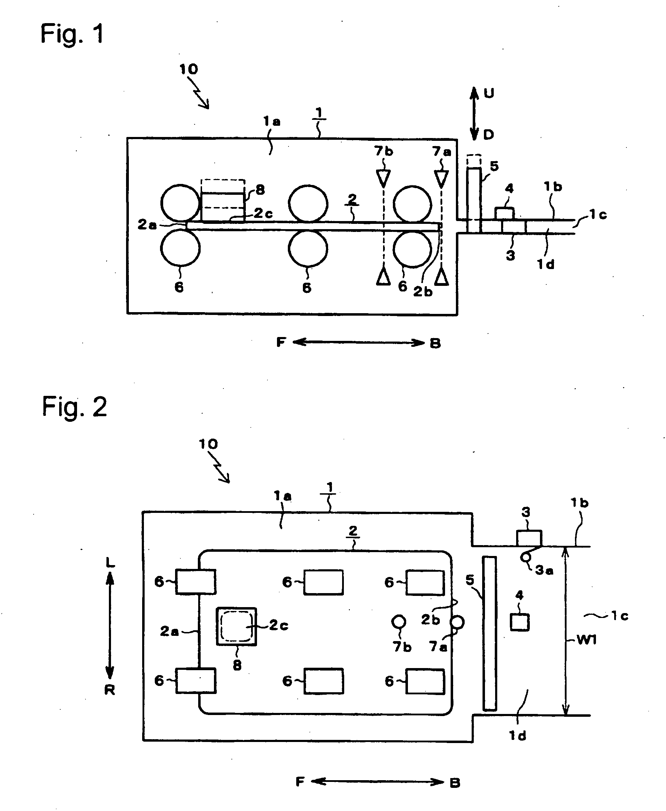

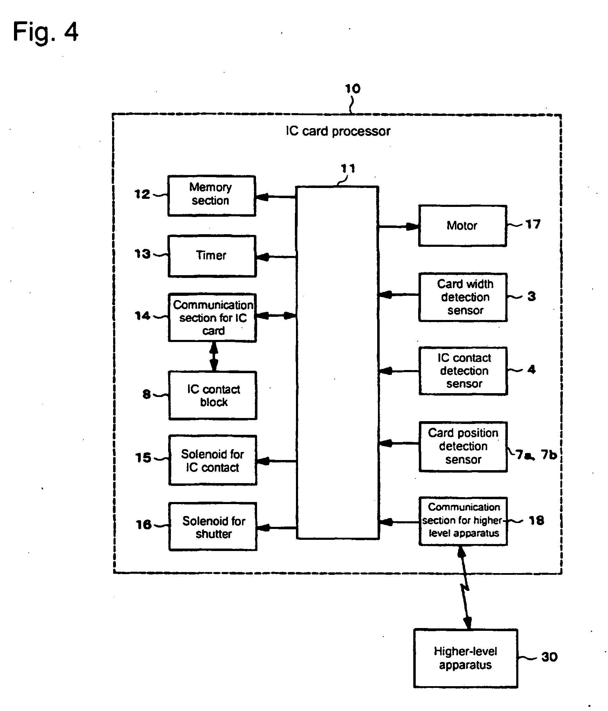

Fig. 1 and Fig. 2 are views schematically illustrating a configuration of an IC card processor according to an embodiment of the present invention. Fig. 1 is a side view illustrating the inside of the IC card processor, and Fig. 2 is a plan view illustrating the inside of the IC card processor. In Fig. 1, reference numeral 10 denotes an IC card processor, which is mounted on and connected to a higher-level apparatus 30 (shown in Fig. 4), e.g. an automated money processing unit. Reference numeral 1 denotes the body of the IC card processor 10, and reference numeral 1a denotes the internal space of the body 1 (hereinafter referred to as the body inside). Reference numeral 1b denotes an insertion section, arranged so as to protrude from the body 1 and comprising a non-magnetic material such as a synthetic resin, reference numeral 1c is an insertion slot which is formed in the insertion section 1b and into which an IC card 2 is inserted, and reference numeral 1d is a passage for the IC card 2 from the insertion slot 1c to the body inside 1a. The insertion section 1b constitutes one embodiment of the insertion section in the present invention, and the insertion slot 1c constitutes one embodiment of the insertion slot in the present invention.

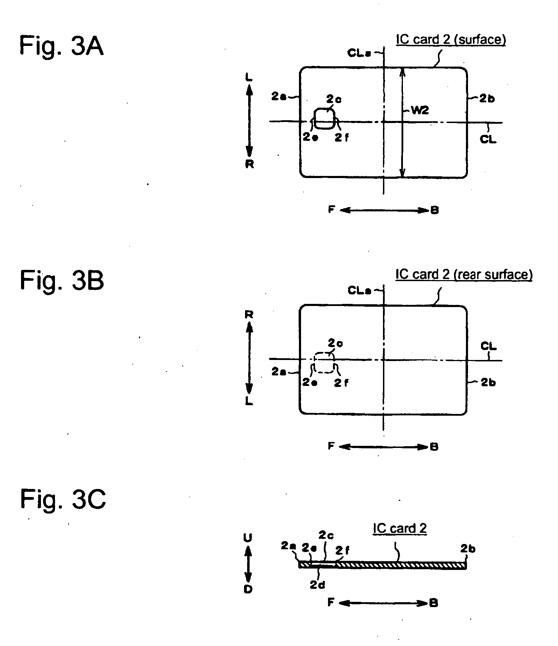

Reference numeral 3 denotes a card width detection sensor comprised of a limit switch, and disposed on the L-direction-side face of the passage 1d in proximity to the insertion slot 1c, as shown in Fig. 2. This card width detection sensor 3 detects the presence or absence of an object having a width substantially the same as the card width W2 (shown in Fig. 3A) in proximity to the insertion slot 1c. For example, after being inserted from the insertion slot 1c, the IC card 2 moving along the passage 1d having a width W1 slightly larger than the card width W2 in the F direction comes in contact with an actuator 3a of the sensor 3, to push the actuator 3a in the L direction, and therefore the sensor 3 detects the object having a width substantially the same as the card width W2 and shifts from an OFF state to an ON state to output an ON signal to a control section 11 (shown in Fig. 4). When an object having a width smaller than the card width W2 is inserted from the insertion slot 1c, since the object does not come into contact with the actuator 3a, the sensor 3 does not detect the object and maintains the OFF state, thereby to keep outputting an OFF signal to the control section 11. The card width detection sensor 3 constitutes one embodiment of the width detection device in the present invention.

Reference numeral 4 denotes an IC contact detection sensor comprised of a frequency oscillation type proximity sensor, which is disposed on the U-direction-side face of the passage 1d in proximity to the insertion slot 1c, as shown in Fig. 1. This IC contact detection sensor 4 has characteristics such that: an oscillation frequency does not change when a non-magnetic material such as a synthetic resin comes as close as immediately below the IC contact detection sensor 4; the oscillation frequency decreases when a ferromagnetic material such as iron comes as close as immediately below the IC contact detection sensor 4; and the oscillation frequency increases when a weak magnetic metal such as copper, gold or aluminum comes as close as immediately below the IC contact detection sensor 4. Taking advantage of such characteristics, the IC contact detection sensor 4 detects the presence or absence of an IC contact 2c made of a copper pattern or gold plate on the IC card 2 in proximity to the insertion slot 1c. For example, upon insertion of the IC card 2 from the insertion slot 1c, the sensor 4 detects the IC contact 2c since the oscillation frequency thereof increases when the IC contact 2c comes as close as immediately below the sensor 4, and the sensor 4 shifts from the OFF state to the ON state, thereby to output an ON signal to the control section 11. Further, when a portion made of a synthetic resin other than the IC contact 2c on the IC card comes as close as immediately below the sensor 4, the sensor 4 does not detect the IC contact 2c as the oscillation frequency thereof remains unchanged, and thus maintains the OFF state, thereby to keep outputting an OFF signal to the control section 11. The IC contact detection sensor 4 constitutes one embodiment of the IC contact detection device in the present invention.

Reference numeral 5 denotes a shutter disposed on the passage 1d, which is opened and closed in the U/D upward and downward directions by a solenoid 16 (shown in Fig. 4). The shutter 5 controls the entry of the IC card 2 inserted from the insertion slot 1d into the body inside 1a, or the ejection of the IC card 2 from the body inside 1a to the insertion slot 1c. In Fig. 1, the closed state of the shutter 5 is indicated with a solid line, while the opened state of the shutter 5 is indicated with a broken line. The shutter 5 constitutes one embodiment of the control device in the present invention. Reference numeral 6 denotes a pair of upper/lower rollers (shown in Fig. 4), and the rollers forwardly roll to carry the IC card 2 in the F direction when a motor 17 is forwardly driven, while the rollers backwardly roll to carry the IC card 2 in the B direction when the motor 17 is backwardly driven. Reference numeral 7a denotes a first card position detection sensor and reference numeral 7b denotes a second card position detection sensor, each of which is comprised of a photo micro sensor. These sensors 7a and 7b detect that the IC card 2 has been carried to a prescribed position of the body inside 1a. It is to be noted that the sensors 7a and 7b take the OFF state when not detecting the IC card 2, thereby to output an OFF signal to the control section 11; the sensors 7a and 7b take the ON state when detecting the IC card 2, thereby to output an ON signal to the control section 11. Reference numeral 8 denotes an IC control block, which is moved by the solenoid in the U/D upward and downward directions. After the IC card 2 is carried by the roller 6 into the body inside 1a and stops in a prescribed manner as in Fig. 1, the IC contact block 8 moves from the position indicated with the broken line to the position indicated with the solid line to come into contact with the IC chip 2d (shown in Fig. 3C) in the IC card 2, so as to read and write information from and into the IC contact 2c in the IC card 2.

Fig. 3 illustrates a schematic configuration of the IC card 2. Fig. 3A illustrates the surface of the IC card 2; Fig. 3B illustrates the rear surface of the IC card 2; Fig. 3C illustrates the cross section of the IC card 2. In Fig. 3A, reference numeral 2a denotes the front end (the F-direction-side end) of the IC card 2; reference numeral 2b denotes the back end (the B-direction-side end) of the IC card 2; CL denotes the center line parallel to the F/B directions of inserting the IC card 2; CLa denotes the center line vertical to the F/B insertion directions. Reference numeral 2c denotes the IC contact on the IC card 2, which is disposed at a prescribed position and has a prescribed size so that the IC contact 2c is apart a prescribed distance from the center line CLa and the most part thereof is disposed on the L-direction-side of the center line CL. This IC contact 2c is constituted of a copper pattern, which is nickel plated and gold plated. Reference numeral 2e denotes the front end of the IC contact, and reference numeral 2f denotes the back end of the IC contact. Reference numeral 2d shown in Fig. 3C denotes an IC chip of the IC card 2, which is berried in the IC card 2 so as to be positioned immediately below the IC contact 2c. This IC chip 2d is constituted by including a copper pattern, an aluminum pattern or the like. The portion other than the IC contact 2c and IC chip 2d of the IC card 2 is comprised of a synthetic resin.

Fig. 4 is a block diagram representing an electric configuration of the IC card processor 10. In Fig. 4, reference numeral 11 denotes a control section for controlling each section of the IC card processor 10, and composed of a CPU, a ROM, a RAM, a later-described control circuit, and the like. It should be noted that a CPU operation program and the like are stored in the ROM, and a control data for use in controlling each section by the CPU is stored in the RAM in a readable/writable manner. Reference numeral 12 denotes a memory section comprised of the RAM and a non-volatile memory, and reference numeral 13 denotes a timer for measuring time. Reference numeral 14 denotes a communication section for an IC card, comprising a communication circuit for communicating with the IC chip 2d in the IC card 2 via the above-described IC contact block 8. Through this communication section 14, the control section 11 distributes a current from the IC contact block 8 to the IC contact 2c on the IC card 2, to read/write information from and into the IC chip 2d. The IC block 8 and the communication section 14 for an IC card constitute one embodiment of the reading/writing device in the present invention. Reference numeral 15 denotes a solenoid for an IC contact for moving the IC contact block 8. The control section 11 comprises a control circuit for controlling the drive of the solenoid 15 for an IC contact, and drives the solenoid 15 by the circuit to move the IC contact block 8 to the position in contact with the IC contact 2c on the IC card 2 (position indicated with the solid line in Fig. 1) or to the position off the IC contact 2c (position indicated with the broken line in Fig. 1). Reference numeral 16 denotes a solenoid for a shutter for opening/closing the shutter 5. The control section 11 comprises a control circuit for controlling the drive of the solenoid 16, and drives the solenoid 16 by the circuit to close the shutter 5 so as to control the entry of the IC card 2 from the insertion slot 1c into the body inside 1a (the state indicated with the solid line in Fig. 1), or to open the shutter 5 so as to release control over the entry of the IC card 2. Such a control section 11 constitutes one embodiment of the release device in the present invention.

The reference numeral 17 denotes a motor for rolling the above-described rollers 6. The control section 11 comprises a circuit for controlling the drive of the motor 17, and forwardly or backwardly drives the motor 17 by the circuit to roll the rollers 6 so as to carry the IC card 2 to a prescribed position of the body inside 1a at a prescribed speed. Reference numeral 3 denotes the above-described card width detection sensor; reference numeral 4 denotes the above-described IC contact detection sensors; reference numerals 7a and 7b denote the above-described card position detection sensors. The control section 11 comprises a receive circuit for receiving an output signal from each of the sensors 3, 4, 7a and 7b, and recognizes the detecting state of each of the sensors 3, 4, 7a and 7b. Further, the control section 11 determines whether the IC card has been inserted into the insertion slot 1c or not on the basis of temporal variations in detecting state of the IC contact detection sensor 4, as described later. This control section 11 constitutes one embodiment of the determination device in the present invention. Reference numeral 18 denotes a communication section for a higher-level apparatus comprising the higher-level apparatus 30 and a communication circuit for mutual communication with the higher-level apparatus 30. The control section 11 sends information read out of the IC card 2 by this communication section 18 to the higher-level apparatus 30, or receives information to be written into the IC card 2 from the higher-level apparatus 30.

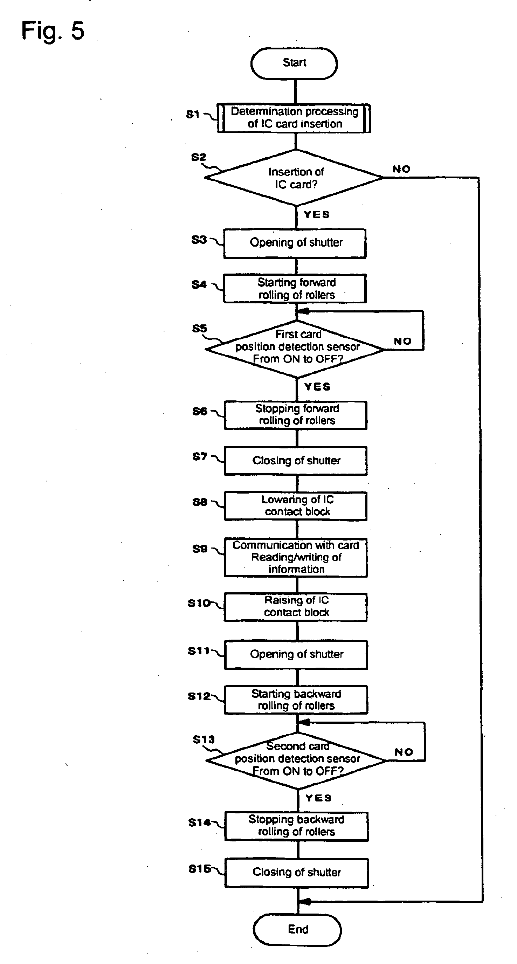

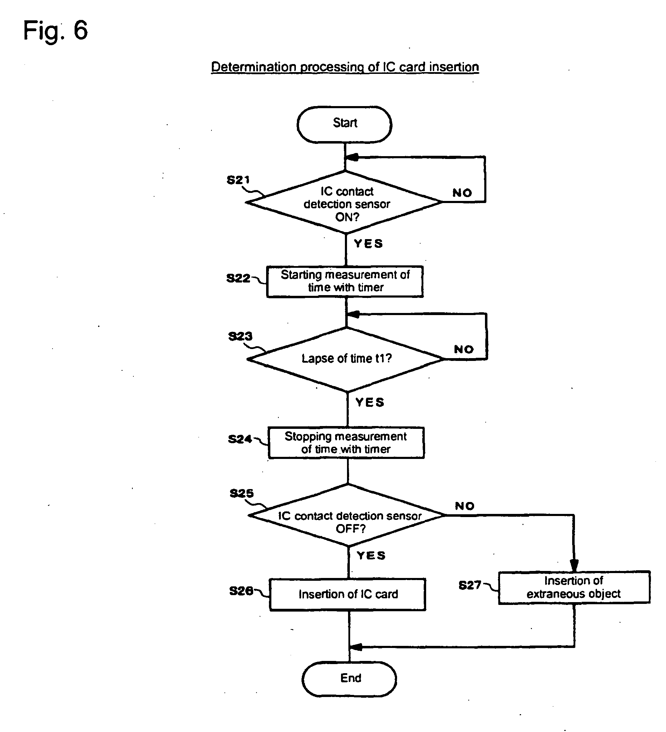

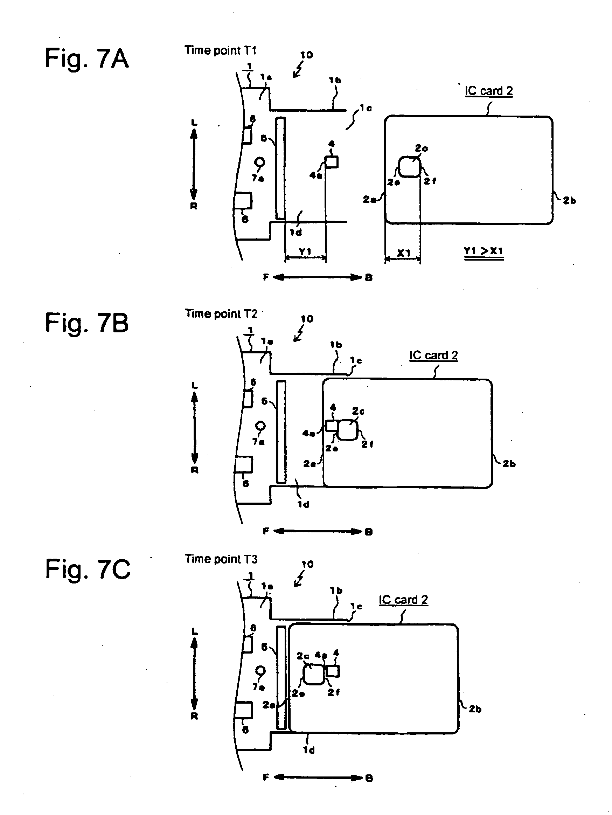

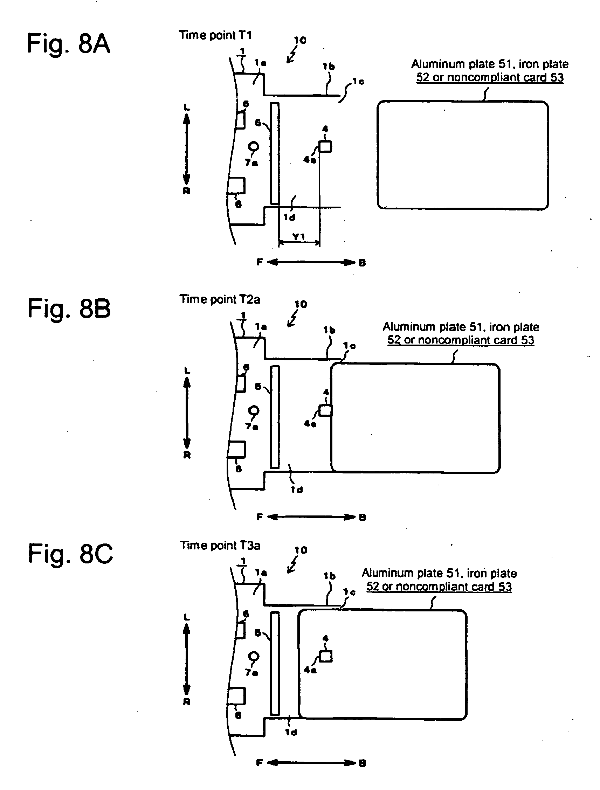

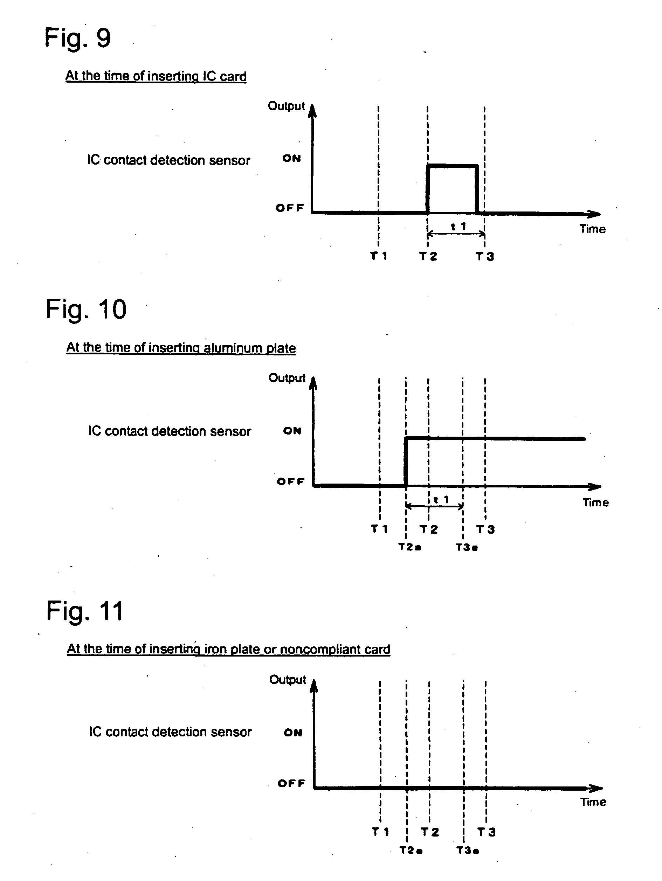

Fig. 5 is a flowchart showing basic operational procedure of the IC card processor 10. Fig. 6 is a flowchart showing detailed procedure of determination processing of the IC card insertion (Step S1) in Fig. 5. Each processing is executed by the control section 11 (specifically, the CPU comprised in the control section 11). It is to be noted that, in describing Fig. 6, Fig. 7 illustrating the inserted state of the IC card 2 being inserted into the insertion slot 1c, Fig. 8 illustrating the state of a non-compliant card or an extraneous object being inserted into the insertion slot 1c, and Figs. 9 to 11 showing the detecting state of the IC contact detection sensor 4 are referred to accordingly.

First, the control section 11 executes the determination processing of the IC card insertion (Step S1) in Fig. 5 according to the flowchart in Fig. 6. It should be noted that in the present embodiment the IC contact detection sensor 4 is disposed in such a position that the distance Y1 from the shutter 5 to the F-direction-side end 4a of the IC contact detection sensor 4 is longer than the distance X1 from the front end 2a of the IC card 2 to the back end 2f of the IC contact 2c (Y1 > X1), as shown in Fig 7A. When the IC card 2 is inserted into the insertion slot 1c, as shown in Fig. 7A, at the time point T1 before the insertion of the IC card 2, the IC contact detection sensor 4 detects nothing and maintains the OFF state (non-detecting state) as shown in Fig. 9. When the IC card 2 is inserted into the insertion slot 1c in the F direction and the state of Fig. 4A is shifted to the state of the time point T2 shown by Fig. 7B, the IC contact detection sensor 4 detects the front end 2e of the IC contact 2c on the IC card 2 positioned immediately below the IC contact detection sensor 4, and shifts from the OFF state to the ON state (detecting state) as shown in Fig. 9, thereby to output an ON signal to the control section 11. Therefore, with the IC contact detection sensor 4 having shifted to the ON state (Step S21 in Fig. 6: YES), the control section 11 starts measuring the time with the above-described timer 13 (Step S22). Thereafter, when a given time t1 has elapsed as measured with the timer 13 (Step S23: YES), the control section 11 stops the timer 13 (Step S24), to confirm whether the IC contact detection sensor 4 has taken the OFF state or not (Step S25). It is to be noted that the given time t1 is set to be shorter than the elapsed time from the insertion of the IC card by a user into the insertion slot 1c at a predetermined speed until crashing of the front end 2a of the IC card 2 onto the shutter 5. At the time point T3 when the given time t1 has elapsed from the time point T2, the IC contact 2c has already passed the portion immediately below the IC contact detection sensor 4, as shown in Fig. 7C. Therefore, as shown in Fig. 9, the IC contact detection sensor 4 detects the back end 2f of the IC contact 2c and shifts from the ON state to the OFF state just before the time point T3, thereby to output an OFF signal to the control section 11 at the time point T3. Accordingly, with the IC contact detection sensor 4 having taken the OFF state (Step S25 in Fig. 6: YES), the control section 11 determines that the IC card 2 has been inserted into the insertion slot 1c (Step S26), to complete the determination processing of the IC card insertion, and the procedure is shifted to Step S2 in Fig. 5. It is to be noted that the presence of an object having the card width S2 may be confirmed by the above-described card width W2 detection sensor 3 before the determination of the insertion of the IC card 2 in Step S26.

After the procedure is shifted to Step S2 in Fig. 5, since the control section 11 has determined the insertion of the IC card by the determination processing of the IC card insertion as described above (Step S2: YES), the procedure is shifted to Step S3 and the solenoid 16 (Fig. 4) is driven to open the shutter 5. This releases the control over the entry of the IC card 2 into the body inside 1a and the IC card 2 is then inserted into the body inside 1a. Upon opening the shutter 5, the control section 11 starts a forward drive of the motor 17 (Fig. 4) to start a forward rolling of the rollers 6 (Step S4), and the IC card is carried by the rollers 6 in the F direction to be introduced into the body inside 1a. When the above-described first card position detection sensor 7a (Fig. 1) detects the back end 2b of the IC card 2 and shifts from the ON state to the OFF state (Step S5: YES), the control section 11 stops the drive of the motor 17 to stop the forward rolling of the rollers 6 (Step S6). Herein, the IC card 2 stops in the position where the IC contact block 8 can be brought into contact with the IC contact 2c, as shown in Fig. 1. After stopping the forward rolling of the rollers 6, the control section 11 drives the solenoid 16 to close the shutter 5 (Step S7).

Subsequently, the control section 11 drives the solenoid 15 (Fig. 4) to lower the IC contact block 8 to the position indicated with the solid line in Fig. 1 (Step S8) so that the IC contact block 8 is brought into contact with the IC contact 2c on the IC card 2. The control section 11 then communicates with the IC card 2 by device of the IC contact block 8 and the above-described communication section 14 (Fig. 4) to read information from the IC chip 2d or write information into the IC chip 2d (Step S9). It should be noted that the information read from the IC chip 2d is sent to the above-described higher-level apparatus 30 by the communication section 18, and the information to be written into the IC chip 2d is received from the higher-level apparatus 30 by the communication section 18 in advance of or after sending out the information read from the IC chip 2d. After completing reading and writing of information from and into the IC chip 2d to complete the communication with the IC card 2, the control section 11 drives the solenoid 15 to raise the IC contact block 8 to the position indicated with the broken line in Fig. 1 (Step S10) for separating the IC contact block 8 from the IC contact 2c on the IC card 2. Thereafter, the control section 11 drives the solenoid 16 to open the shutter 5 (Step S11) for ejecting the IC card 2 to the insertion slot 1c and backwardly drives the motor 17 to backwardly roll the rollers 6 (Step S12) for carrying the IC card 2 by the rollers 6 in the B direction. When the above-described second card position detection sensor 7b (Fig. 1) detects the front end 2a of the IC card 2 and shifts from the ON state to the OFF state (Step S13: YES), the control section 11 stops the drive of the motor 17 to stop the backward rolling of the rollers 6 (Step S14). Herein, the IC card 2 is ejected to the insertion slot 1c and stops in such a state that the back end 2b protrudes from the insertion slot 1c. Further, the above-described card width detection sensor 3 (Fig. 1) detects the IC card 2 to take the ON state. Since the card width detection sensor 3 takes the OFF state after the IC card 2 is taken out of the insertion slot 1c, the control section 11 drives the solenoid 16 to close the shutter 5 (Step S15), and then completes the processing of the IC card 2.

On the other hand, in the case where a metal, which is weak magnetic like the metal (copper, gold etc.) constituting the IC contact 2c on the IC card 2, e.g. a plate comprising aluminum, is inserted into the insertion slot 1c as an extraneous object, the IC contact detection sensor 4 detects nothing until the time point T1 before insertion of an aluminum plate 51 as shown in Fig. 8A, and maintains the OFF state as shown in Fig. 10. It is to be noted that the external shape of the aluminum plate 51 is substantially the same as that of the IC card 2. When the aluminum plate 51 is inserted into the insertion slot 1c in the F direction and the state of Fig. 8A is shifted to the state of the time point T2 shown in Fig. 8B, the IC contact detection sensor 4 detects the aluminum plate 51 positioned immediately below the IC contact detection sensor 4 and shifts from the OFF state to the ON state as shown in Fig. 10, thereby to output an ON signal to the control section 11. (It should be noted that the time point T2a comes earlier than the time point T2.) Therefore, with the IC contact detection sensor 4 having taken the ON state (Step S21 in Fig. 6: YES), the control section 11 starts measuring the time with the above-described timer 13 (Step S22). Subsequently, after a given time t1 has elapsed as measured with the timer 13 (Step S23: YES), the control section 11 stops the timer 13 (Step S24) to confirm whether the IC contact detection sensor 4 has taken the OFF state or not (Step S25). Even at the time point T3a when the given time t1 has elapsed from the time point T2a, the aluminum plate 51 is positioned immediately below the IC contact detection sensor 4, as shown in Fig. 7C. Therefore, the IC contact detection sensor 4 maintains the ON state while detecting the aluminum plate 51, thereby to keep outputting an ON signal to the control section 11 as shown in Fig. 10. Therefore, with the IC contact detection sensor 4 not having taken the OFF state (Step S25 in Fig. 6: NO), the control section 11 determines that an extraneous object has been inserted into the insertion slot 1c (Step S27) to complete the determination processing of the IC card insertion, and the procedure is shifted to Step S2 in Fig. 5. After the procedure is shifted to Step S2 in Fig. 5, since the control section 11 has not determined the insertion of the IC card 2 as thus described (Step S2: NO), the processing is immediately terminated without executing any processing of Step S3 to Step S15.

Further, when a ferromagnetic metal, e.g. a plate comprising iron, is inserted as an extraneous object into the insertion slot 1c, or a non-compliant card other than the IC card 2 is inserted into the insertion slot 1c, the IC contact detection sensor 4 detects nothing at the time point T1 before insertion of an iron plate 52 or a non-compliant card 53 as shown in Fig. 8A, and maintains the OFF state as shown in Fig. 11. It should be noted that the respective outer shapes of the iron plate 52 or the non-compliant card 53 are substantially the same as that of the IC card 2. Moreover, the non-compliant card 53 is mainly composed of a non-magnetic material, such as a synthetic resin, and does not contain a metal such as copper or gold which constitutes the IC contact 2c. When the iron plate 52 or the non-compliant card 53 is inserted into the insertion slot 1c in the F direction and the state of Fig. 8A is shifted to the state of the time point T2a shown in Fig. 8B, although the F-direction-side end of the iron plate 52 or the non-compliant card 53 is positioned immediately below the IC contact detection sensor 4, the IC contact detection sensor 4 does not detect the iron plate 52 or the non-compliant card 53 and maintains the OFF state as shown in Fig. 11, thereby to keep outputting an OFF signal to the control section 11. Therefore, with the IC contact detection sensor 4 not having taken the ON state (Step S21 in Fig. 6: NO), each processing of Step S22 to Step S27 is not executed. Further, each processing of Step S2 to Step S15 in Fig. 5 is not executed either.

As thus described in the first embodiment 1, when the IC card is inserted into the insertion slot 1c, the IC contact detection sensor 4 detects the IC contact 2c on the IC card 2 at the timing of the time point T2 to take the ON state, and then stops detecting the IC contact 2c at the timing just before the time point T3 to take the OFF state, and hence it is possible to determine that the IC card 2 has been inserted into the insertion slot 1c. Further, when the aluminum plate 51, which is weak magnetic like the metal constituting the IC contact 2c, is inserted into the insertion slot 1c, although the IC contact detection sensor 4 takes the ON state at the timing of the time point T2a which is earlier than the time point T2, the IC contact detection sensor 4 does not take the OFF state at the timing of the time point T3a when a given time t1 has elapsed from the time point T2, and it is therefore possible to determine that an extraneous object other than the IC card 2 has been inserted into the insertion slot 1c. Furthermore, when the iron plate 52 or the non-compliant card 53 other than the IC card 2, which is a ferromagnetic material, is inserted into the insertion slot 1c, since the IC contact detection sensor 4 maintains the OFF state and shows no sign of shifting to the ON state, the insertion of the IC card 2 into the insertion slot 1c is not determined. Accordingly, when the insertion of the IC card 2 is determined, the shutter 5 is opened to release the control over entry of an IC card so as to allow only the IC card 2 to enter the body inside 1a; therefore, only when the IC card 2 is inserted into the insertion slot 1c, the IC card 2 can be processed by the IC contact block 8 and the communication section 14, and insertion of an extraneous object from the insertion slot 1c into the body inside 1a can be prevented.

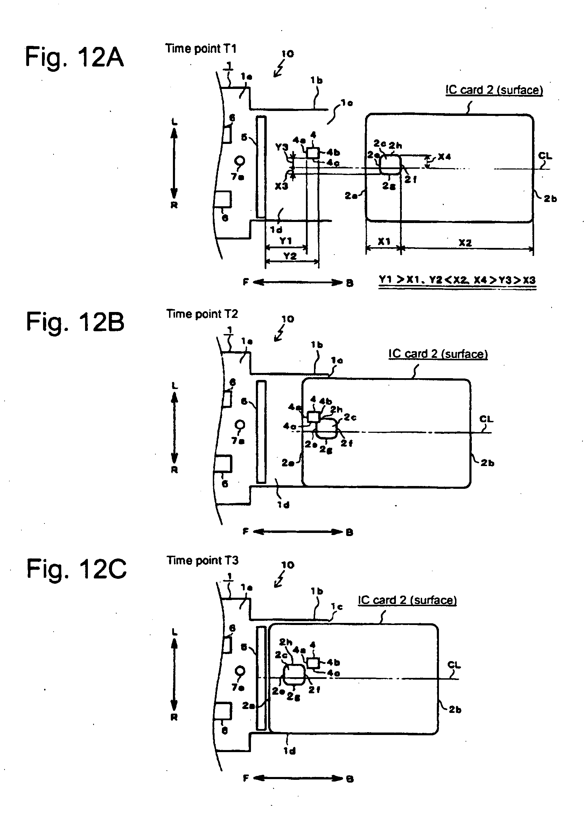

Fig. 12 to Fig. 18 are views representing a second embodiment of the present invention. It is to be noted that in Fig. 12 to Fig. 15 the same numerals are provided to the same portions as in above-described Fig. 1 to Fig. 3. In the present embodiment, as shown in Fig. 12A, the IC contact detection sensor 4 is disposed in such a position in the F/B directions that the distance Y1 from the shutter 5 to the F-direction-side end 4a of the IC contact detection sensor 4 is longer than the distance X1 from the front end 2a of the IC card 2 to the back end 2f of the IC contact 2c (Y1 > X1), and the distance Y2 from the shutter 5 to the B-direction-side end 4b of the IC contact detection sensor 4 is shorter than the distance X2 from the back end 2f of the IC contact 2c to the back end 2b of the IC card 2 (Y2 < X2). Moreover, the IC contact detection sensor 4 is disposed in such a position in the L/R directions that the distance Y3 from the center line CL of the IC card 2 to the R-direction-side end 4c of the IC contact detection sensor 4 is longer than the distance X3 from the IC contact 2c of the center line CL to the R-direction-side end 2g of the IC contact 2c, and shorter than the distance X4 from the center line CL to the L-direction-side end 2h of the IC contact 2c (X4 > Y3 > X3).

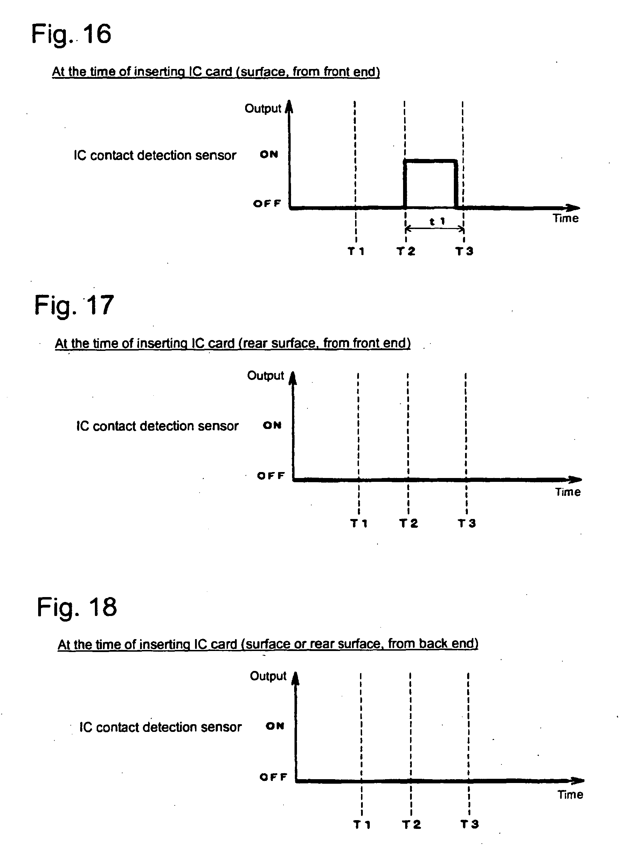

When the IC card 2 is inserted into the insertion slot 1c in an orientation allowing the surface of the IC card 2 with the IC contact 2c appearing thereon to face the IC contact block 8 (Fig. 1) (the surface is in the upward orientation) from the front end 2a which is closer to the IC contact 2c, the IC contact detection sensor 4 detects nothing at the time point T2 before the insertion of the IC card 2 as shown in Fig. 12A, and maintains the OFF state as shown in Fig. 16. When the IC card 2 is inserted in the F direction into the insertion slot 1c and the state of Fig. 12A is shifted to the state of the time point T2 shown in Fig. 12B, the IC contact detection sensor 4 detects the end 2h of the IC contact 2c most distant from the center line CL of the IC card 2 positioned immediately below the IC contact detection sensor 4, and shifts from the OFF state to the ON state as shown in Fig. 16. Since the IC contact 2c has passed the portion immediately below the IC contact detection sensor 4 at the time point T3 when a given time t1 has elapsed from the time point T2 as shown in Fig. 12C, the IC contact detection sensor 4 stops detecting the IC contact 2c just before the time point T3 as shown in Fig. 16, and shifts from the ON state to the OFF state.

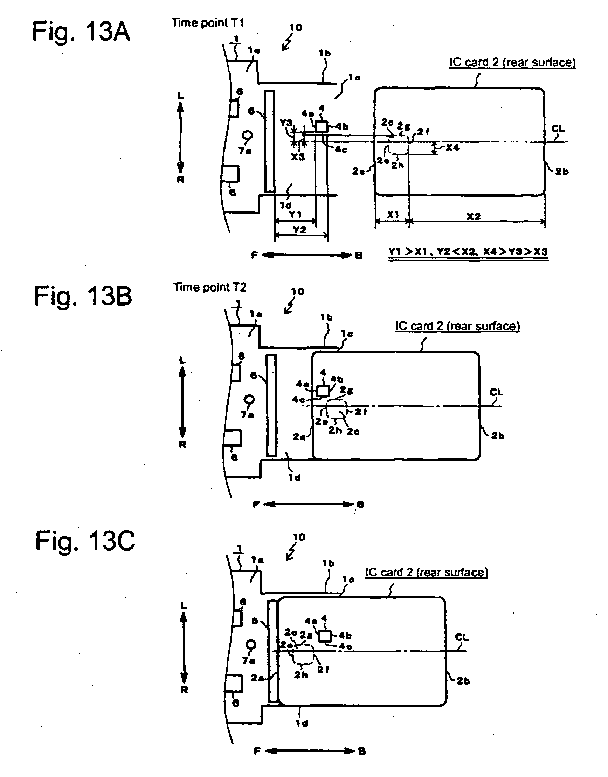

On the other hand, in the case where the IC card 2 is inserted into the insertion slot ic in an orientation allowing the rear surface of the IC card 2 with the IC contact not appearing thereon to face the IC contact block 8 (the rear surface is in the upward orientation) from the front end 2a, the IC contact detection sensor 4 detects nothing at the time point T2 before the insertion of the IC card 2 as shown in Fig. 12A, and maintains the OFF state as shown in Fig. 17. However, even when the IC card 2 is inserted in the F direction into the insertion slot 1c and the state of Fig. 13A is shifted to the state of the time point T2 shown in Fig. 13B, the end 2g of the IC contact 2c least distant from the center line CL is not positioned immediately below the IC contact detection sensor 4. Therefore, even when the front end 2a of the IC card 2 strikes to the shutter 5 and stops thereat as shown in Fig. 13C, the IC contact detection sensor 4 does not detect the end 2g of the IC contact 2c and maintains the OFF state as shown in Fig. 17.

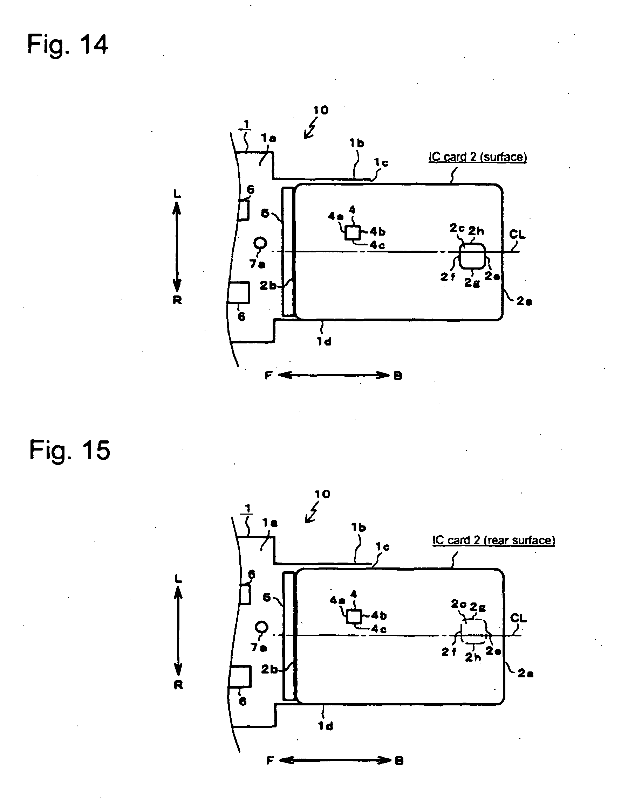

Further, in the case where the IC card 2 is inserted into the insertion slot 1c in an orientation allowing the surface of the IC card 2 to face the IC contact block 8 from the back end 2b which is most distant to the IC contact 2c, even when the IC card 2 is inserted in the F direction into the insertion slot 1c and the back end 2b of the IC card 2 strikes to the shutter 5 and stops thereat as shown in Fig. 14, the IC contact detection sensor 4 does not detect the IC contact 2c and maintains the OFF state as shown in Fig. 18. Moreover, in the case where the IC card 2 is inserted into the insertion slot 1c in an orientation allowing the rear surface of the IC card 2 to face the IC contact block 8 from the back end 2b, even when the IC card 2 is inserted in the F direction into the insertion slot 1c and the back end 2b of the IC card strikes to the shutter 5 and stops thereat as shown in Fig. 15, the IC contact detection sensor 4 does not detect the IC contact 2c and maintains the OFF state as shown in Fig. 18.

As described above in the second embodiment, in the case where the IC card 2 is inserted into the insertion slot 1c in an orientation allowing the surface of the IC card 2 to face the IC contact block 8 from the front end 2a, the IC contact detection sensor 4 detects the IC contact 2c on the IC card 2 at the timing of the time point T2 to take the ON state and then stops detecting the IC contact 2c at the timing just before the time point T3 to take the OFF state, and it is therefore possible from the flowchart in Fig. 6 to determine that the IC card 2 has been inserted into the insertion slot 1c. As a result, from the flowchart in Fig. 5, the shutter 5 is opened to release the control over entry of an IC card, and it becomes possible to process the IC card 2 with the IC contact block 8 and the communication section 14. Further, in the case where the IC card 2 is inserted into the insertion slot 1c in an orientation allowing the rear surface of the IC card 2 to face the IC contact block 8 from the front end 2a, since the IC contact detection sensor 4 maintains the OFF state and shows no sign of taking the ON state, the insertion of the IC card 2 into the insertion slot 1c is not determined from the flowchart in Fig. 6. As a result, the shutter 5 is not opened to release control over entry of an IC card, and the IC card 2 is not processed by the IC contact block 8 nor the communication section 14.

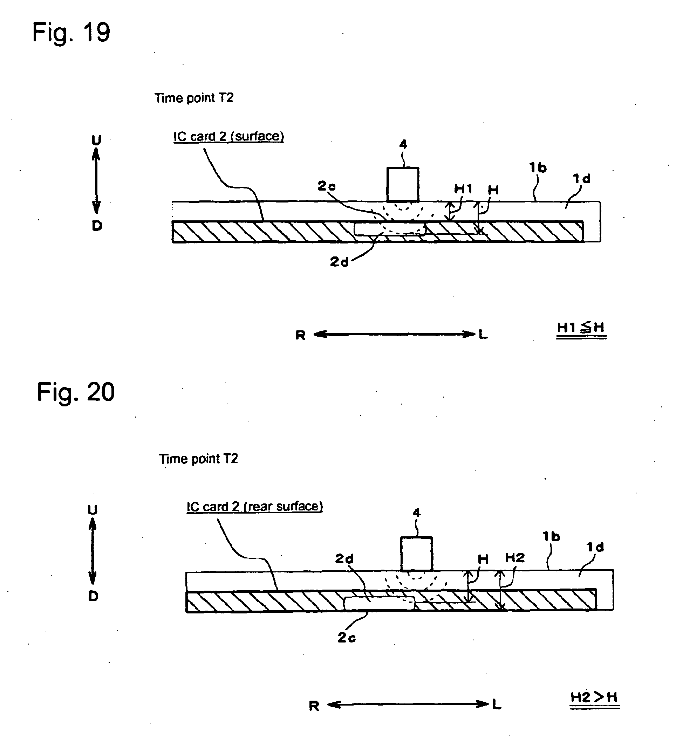

Fig. 19 and Fig. 20 are views representing a third embodiment of the present invention. It is to be noted that Fig. 19 and Fig. 20 illustrate cross sectional views of the insertion section 1b shown in Fig. 1 being cut along the line vertical to the F direction. Therefore, in Fig. 19 and Fig. 20, the direction vertical to the paper is the F direction of inserting the IC card 2. Further, in Fig. 19 and Fig. 20, the same numerals are provided to the same portions as in above-described Fig. 1 to Fig. 3. In the present embodiment, the IC contact detection sensor 4 is disposed in such a position in the U/D directions that, when the IC card 2 is inserted into the insertion slot ic in an orientation allowing the surface of the IC card 2 to face the IC contact block 8 (Fig. 1) (the surface is in the upward orientation) as shown in Fig. 19, the shortest distance H1 to the IC contact 2c is within the detection range of the IC contact 2c (H1 □ H), and also when the IC card 2 is inserted into the insertion slot 1c in an orientation allowing the rear surface of the IC card 2 to face the IC contact block 8 as shown in Fig. 20, the shortest distance H2 to the IC contact 2c is out of the detection range of the IC contact 2c (H2 > H). It is to be noted that the detection range H in which the IC contact detection sensor 4 detects the IC contact 2c may be set equivalent to the detection range of a weak magnetic material in which the IC contact detection sensor 4 can detect a weak magnetic material, or may be set to a prescribed range within the detection range of a weak magnetic material. Specifically, in the case where the detection range H is set equivalent to the detection range of a weak magnetic material, the sensor 4 is brought closer to a weak magnetic material, and an interval between the sensor 4 and the weak magnetic material at the time when the oscillation frequency of the sensor 4 exceeds that of the sensor 4 at a regular time (when not being close to the material) may be set as the detection range H. Further, in the case where the detection range H is set to a prescribed range within the detection range of a weak magnetic material, after a lower limit threshold and a higher limit threshold, which are higher than the oscillation frequency of the sensor 4 at a regular time, are set, the IC contact detection sensor 4 is brought closer to the weak material, and a region obtained by deducting the interval between the sensor 4 and the weak magnetic material when the oscillation frequency of the sensor 4 falls below the upper limit threshold from the interval between the sensor 4 and the weak magnetic material when the oscillation frequency of the sensor 4 exceeds the lower threshold, may be set as the detection range H. In addition to the above-described position in the U/D directions, the IC contact detection sensor 4 is provided in such a position in the F/B directions that the distance Y1 from the shutter 5 to the F-direction-side end 4a of the IC contact detection sensor 4 is longer than the distance X1 from the front end 2a of the IC card 2 to the back end 2f of the IC contact 2c (Y1 > X1), as shown in Fig. 7A.

In the case where the IC card 2 is inserted into the insertion slot 1c in an orientation allowing the surface of the IC card 2 to fact the IC contact block 8, when the IC card 2 is inserted into the insertion slot 1c in the F direction to be in the state of the time point T2 as shown in Fig. 19, the IC contact detection sensor 4 detects the IC contact 2c on the IC card 2 positioned immediately below the IC contact detection sensor 4, and shifts from the OFF state to the ON state as shown in Fig. 9, for example. At the time point T3 when a given time t1 has elapsed from the time point T2, since the IC contact 2c has passed the portion immediately below the IC contact detection sensor 4, the IC contact detection sensor 4 stops detecting the IC contact 2c just before the time point T3 as shown in Fig. 9, and shifts from the ON state to the OFF state.

On the other hand, in the case where the IC card 2 is inserted into the insertion slot 1c in an orientation allowing the rear surface of the IC card 2 to face the IC contact block 8, even when the IC card 2 is inserted into the insertion slot 1c in the F direction to be in the state of the time point T2 as shown in Fig. 20, the IC contact detection sensor 4 does not detect the IC contact 2c on the IC card 2 positioned immediately below the IC contact detection sensor 4, and maintains the OFF state as shown in Fig. 11, for example. Thereafter, even when the IC contact detection sensor 4 strikes to the shutter 5 and stops thereat, the IC contact detection sensor 4 does not detect the IC contact 2c and maintains the OFF state as shown in Fig. 11.

As described above in the third embodiment, in the case where the IC card 2 is inserted into the insertion slot 1c in an orientation allowing the surface of the IC card 2 to face the IC contact block 8, the IC contact detection sensor 4 detects the IC contact 2c on the IC card 2 at the timing of the time point T2 to take the ON state and then stops detecting the IC contact 2c at the timing just before the time point T3 to take the OFF state, and it is therefore possible from the flowchart in Fig. 6 to determine that the IC card 2 has been inserted into the insertion slot 1c. As a result, from the flowchart in Fig. 5, the shutter 5 is opened to release the control over entry of an IC card, and it becomes possible to process the IC card 2 with the IC contact block 8 and the communication section 14. Further, in the case where the IC card 2 is inserted into the insertion slot 1c in an orientation allowing the rear surface of the IC card 2 to face the IC contact block 8, since the IC contact detection sensor 4 maintains the OFF state and shows no sign of taking the ON state from the flowchart in Fig. 6, the insertion of the IC card 2 into the insertion slot 1c is not determined. As a result, the shutter 5 is not opened to release control over entry of an IC card, and the IC card 2 is not processed by the IC contact block 8 nor the communication section 14.

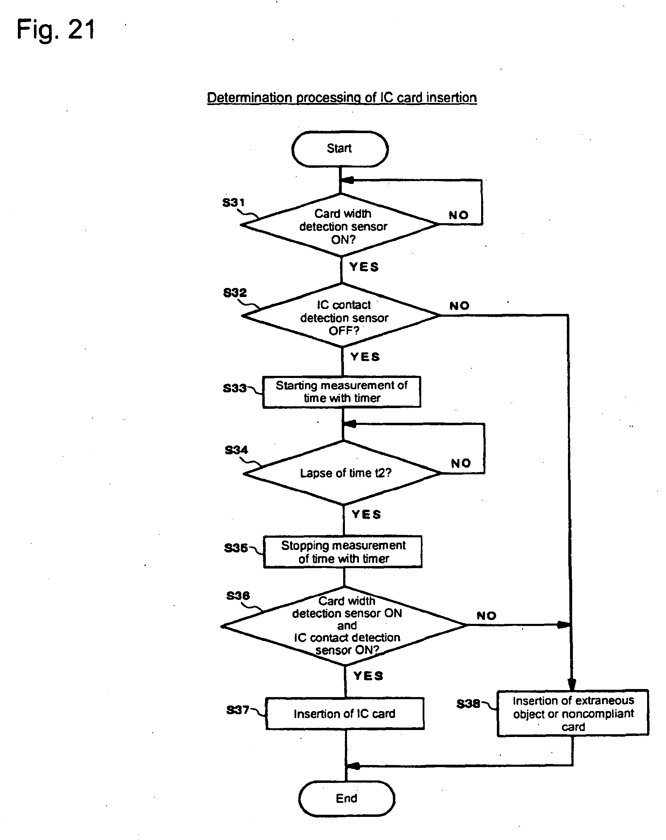

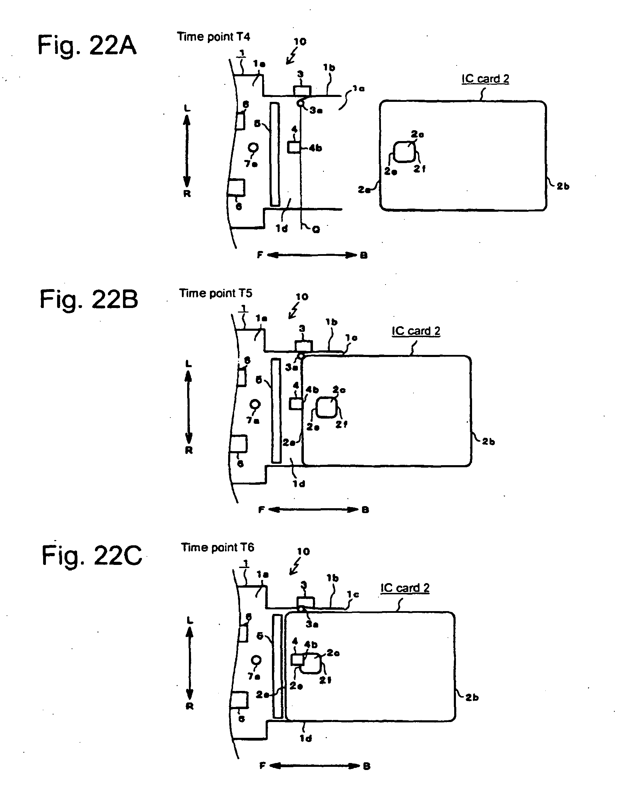

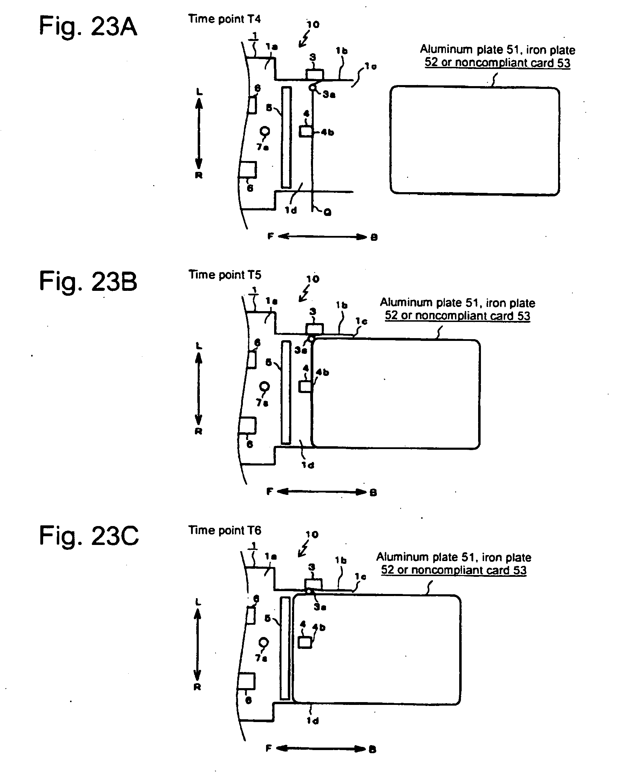

Fig. 21 to Fig. 26 are views representing a fourth embodiment of the present invention. It is to be noted that in Fig. 22 and Fig. 23 the same numerals are provided to the same portions as in above-described Fig. 1 to Fig. 3. In the present embodiment, the determination processing of the IC card insertion (Step S1) in Fig 5 is executed according to the flowchart in Fig. 21 for determining whether the IC card 2 has been inserted or not on the basis of temporal variations in respective detecting states of the IC contact detection sensor 4 and the card width detection sensor 3. Further, in the present embodiment, as shown in Fig. 2A, the B-direction-side end 4b of the IC contact detection sensor 4 and the actuator 3a of the card width detection sensor 3 are arranged on the straight line Q vertical to the F direction of inserting the IC card 2 so that the IC contact detection sensor 4 and the card width detection sensor 3 are provided in the insertion section 1b without an interval therebetween in the F direction of inserting the IC card 2.

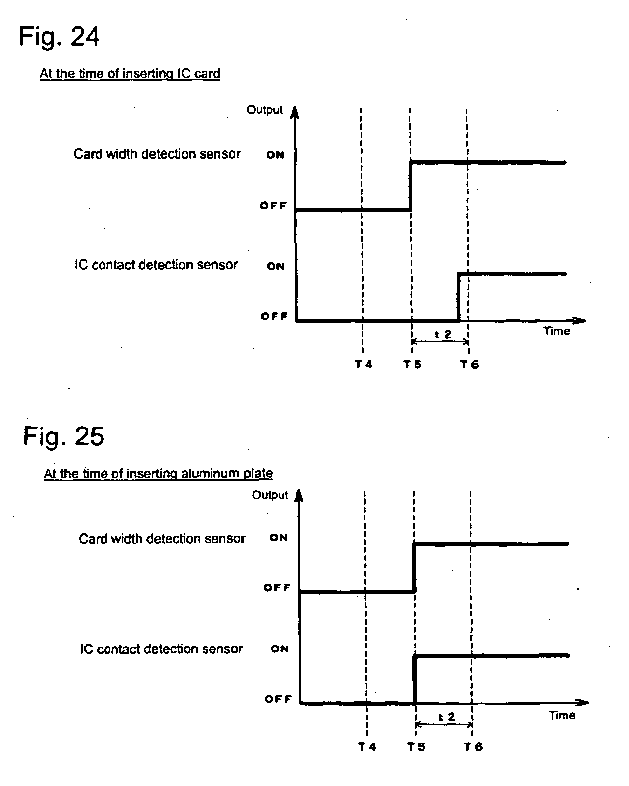

When the IC card 2 is inserted into the insertion slot 1c at the time point T4 before the insertion of the IC card 2 as shown in Fig. 22A, each of the card width detection sensor 3 and the IC contact detection sensor 4 detects nothing and maintains the OFF state as shown in Fig. 24. When the IC card 2 is inserted into the insertion slot 1c in the F direction and the state of Fig. 22A is shifted to the state of the time point T5 shown in Fig. 22B, the IC card 2 is brought into contact with the actuator 3a of the card width detection sensor 3 to push the actuator 3a in the L direction. Therefore, the card width detection sensor 3 detects the IC card 2 and shifts from the OFF state to the ON state as shown in Fig. 24, thereby to output an ON signal to the control section 11. Therefore, with the card width detection sensor 3 having taken the ON state (Step S31 in Fig. 21: YES), the control section 11 confirms whether the IC contact detection sensor 4 has taken the OFF state or not (Step S32). At the time point T5, since the IC contact 2c on the IC card 2 is not positioned immediately below the IC contact detection sensor 4 as shown in Fig. 22B, the IC contact detection sensor 4 outputs an OFF signal to the control section 11 while maintaining the OFF state as shown in Fig. 24. Therefore, with the IC contact detection sensor 4 having taken the OFF state (Step S32 in Fig. 21: YES), the control section 11 starts measuring the time with the above-described timer 13 (Step S33) .

Subsequently, after a given time t2 has elapsed as measured with the timer 13 (Step S34: YES), the control section 11 stops the timer 13 (Step S35) to confirm whether or not the card width detection sensor 3 has taken the ON state and the IC contact detection sensor 4 has taken the ON state (Step S36). It is to be noted that the given time t2 is set to be shorter than the time that elapses between the insertion by a user of the IC card 2 from the insertion slot 1c at a prescribed speed and the striking of the front end 2a of the IC card 2 to the shutter 5. At the time point T6 when a given time t2 has elapsed from the time point T5, as shown in Fig. 22C, the actuator 3a of the card width detection sensor 3 continues to be pushed in the L direction by the IC card 2, the card width detection sensor 3 outputs an ON signal to the control section 11 while maintaining the ON state as shown in Fig. 24. Moreover, since the IC contact 2c on the IC card 2 has already been positioned immediately below the IC contact detection sensor 4 at the time point T6 as shown in Fig. 22C, the IC contact detection sensor 4 detected the front end 2e of the IC contact 2c and shifted from the ON state to the OFF state just before the time point T6 as shown in Fig. 24, thereby to output an ON signal to the control section 11 at the time point T6. Since the card 3 has taken the ON state and the IC contact detection sensor 4 has taken the ON state (Step S36 in Fig. 21: YES), the control section 11 determines that the IC card 2 has been inserted into the insertion slot 1c (Step S37), to complete the determination processing of the IC card insertion, and the procedure is shifted to Step S2 in Fig. 5. After the procedure is shifted to Step S2 in Fig. 5, since the control section 11 has determined the insertion of the IC card in the determination processing of the IC card insertion as described above (Step S2: YES), the procedure is shifted to Step S3 and the solenoid 16 is driven to open the shutter 5. This leads to release of the control over the entry of the IC card 2 into the body inside 1a and the IC card 2 is inserted into the body inside 1a. Thereafter, each of Step S4 to Step S15 is executed in the same procedure as described above to complete the processing of the IC card 2.

In the case where the aluminum plate 51 is inserted into the insertion slot 1c as an extraneous object, on the other hand, as shown in Fig. 23A, each of the card width detection sensor 3 and the IC contact detection sensor 4 detects nothing at the time point T4 before the insertion of the aluminum plate 51, and maintains the OFF state as shown in Fig. 25. When the aluminum plate 51 is inserted into the insertion slot 1c in the F direction and the state of Fig. 23A is shifted to the state of the time point T5 shown in Fig. 23B, the aluminum plate 51 is brought into contact with the actuator 3a of the card width detection sensor 3 and the actuator 3a is then pushed in the L direction. Therefore, the card width detection sensor 3 detects the aluminum plate 51 and shifts from the OFF state to the ON state as shown in Fig 25, thereby to output an ON signal to the control section 11. Therefore, with the card width detection sensor 3 having taken the ON state (S21 in Step S31: YES), the control section 11 confirms whether the IC contact detection sensor 4 has taken the OFF state or not (Step S32). At the time point T5, since the F-direction-side end of the aluminum plate 51 is positioned immediately below the IC contact detection sensor 4 as shown in Fig. 23B, the IC contact detection sensor 4 detects the aluminum plate 51 and shifts from the OFF state to the ON state as shown in Fig. 25, thereby to output an ON signal to the control section 11. Therefore, with the IC contact detection sensor 4 not having taken the OFF state (Step S32 in Fig. 21: NO), the control section 11 determines that an extraneous object has been inserted into the insertion slot 1c (Step S38) to complete the determination processing of the IC card insertion, and the procedure is shifted to Step S2 in Fig. 5. After the procedure is shifted to Step S2 in Fig. 5, since the control section 11 has not determined the insertion of the IC card 2 as thus described (Step S2: NO), the processing is immediately terminated without executing any processing of Step S3 to Step S15.

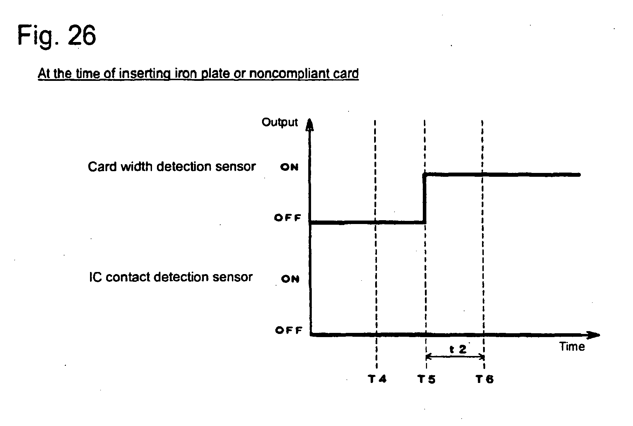

In the case where the iron plate 52 or the non-compliant card 53 is inserted into the insertion slot 1c as an extraneous object, on the other hand, as shown in Fig. 23A, each of the card width detection sensor 3 and the IC contact detection sensor 4 detects nothing at the time point T4 before the insertion of the iron plate 52 or the non-compliant card 53, and maintains the OFF state as shown in Fig. 25. When the iron plate 52 or the non-compliant card 53 is inserted into the insertion slot 1c in the F direction and the state of Fig. 23A is shifted to the state of the time point T5 shown in Fig. 23B, the iron plate 52 or the non-compliant card 53 is brought into contact with the actuator 3a of the card width detection sensor 3 and the actuator 3a is then pushed in the L direction. Therefore, the card width detection sensor 3 detects the iron plate 52 or the non-compliant card 53 and shifts from the OFF state to the ON state as shown in Fig 25, thereby to output an ON signal to the control section 11. With the card width detection sensor 3 having taken the ON state (S21 in Step S31: YES), the control section 11 confirms whether the IC contact detection sensor 4 has taken the OFF state or not (Step S32). At the time point T5, although the F-direction-side end of the iron plate 52 or the non-compliant card 53 is positioned immediately below the IC contact detection sensor 4 as shown in Fig. 23B, the IC contact detection sensor 4 does not detect the iron plate 52 or the non-compliant card 53, thereby to keep outputting an OFF signal to the control section 11 while maintaining the OFF state as shown in Fig. 26. With the IC contact detection sensor 4 having taken the OFF state (Step S32 in Fig. 21: YES), the control section 11 starts measuring the time with the above-described timer 13 (Step S33) .

Subsequently, after a given time t2 has elapsed as measured with the timer 13 (Step S34: YES), the controlling section 11 stops the timer 13 (Step S35) and confirms whether or not the card width detection sensor 3 has taken the ON state and the IC contact detection sensor 4 has taken the ON state (Step S36). At the time point T6 when a given time t2 has elapsed from the time point T5, as shown in Fig. 23C, since the actuator 3a of the card width detection sensor 3 continues to be pushed in the L direction by the iron plate 52 or the non-compliant card 53, the card width detection sensor 3 outputs an ON signal to the control section 11 while maintaining the ON state as shown in Fig. 26. Further, although the iron plate 52 or the non-compliant card 53 is positioned immediately below the IC contact detection sensor 4 at the time point T6 as shown in Fig. 23C, the IC contact detection sensor 4 does not detect the iron plate 52 or the non-compliant card 53 and maintains the OFF state as shown in Fig. 26, thereby to keep outputting an OFF signal to the control section 11. Therefore, since the IC contact detection sensor 4 has not taken the ON state while the card width detection sensor 3 has taken the ON state (Step S36 in Fig. 21: NO), the control section 11 determines that an extraneous object or a non-compliant card has been inserted into the insertion slot 1c (Step S38) to complete the determination processing of the IC card insertion and the procedure is shifted to Step S2 in Fig. 5. After the procedure is shifted to Step S2 in Fig. 5, since the control section 11 has not determined the insertion of the IC card 2 as thus described (Step S2: NO), the processing is immediately terminated without executing any processing of Step S3 to Step S15.

As described above in the fourth embodiment, when the IC card 2 is inserted into the insertion slot 1c, the card width detection sensor 3 detects the IC card 2 at the timing of the time point T5 to take the ON state and then the IC contact detection sensor 4 detects the IC contact 2c on the IC card 2 at the timing just before the time point T6 to take the ON state, and it is therefore possible to determine that the IC card 2 has been inserted into the insertion slot 1c. Moreover, when the aluminum plate 51 is inserted into the insertion slot 1c, the card width detection sensor 3 detects the IC card 2 at the timing of the time point T5 to take the ON state, and concurrently with this the IC contact detection sensor 4 detects the IC contact 2c to take the ON state, and hence it is possible to determine that the IC card 2 has been inserted into the insertion slot 1c. Further, in the case where the iron plate 52 or the non-compliant card 53 is inserted into the insertion slot 1c, after the card width detection sensor 3 detects the IC card 2 to take the ON state, the IC contact detection sensor 4 maintains the OFF state and shows no sign of taking the ON state, and it is thus possible to determine that an extraneous object other than the IC card 2 has been inserted into the insertion slot 1c.

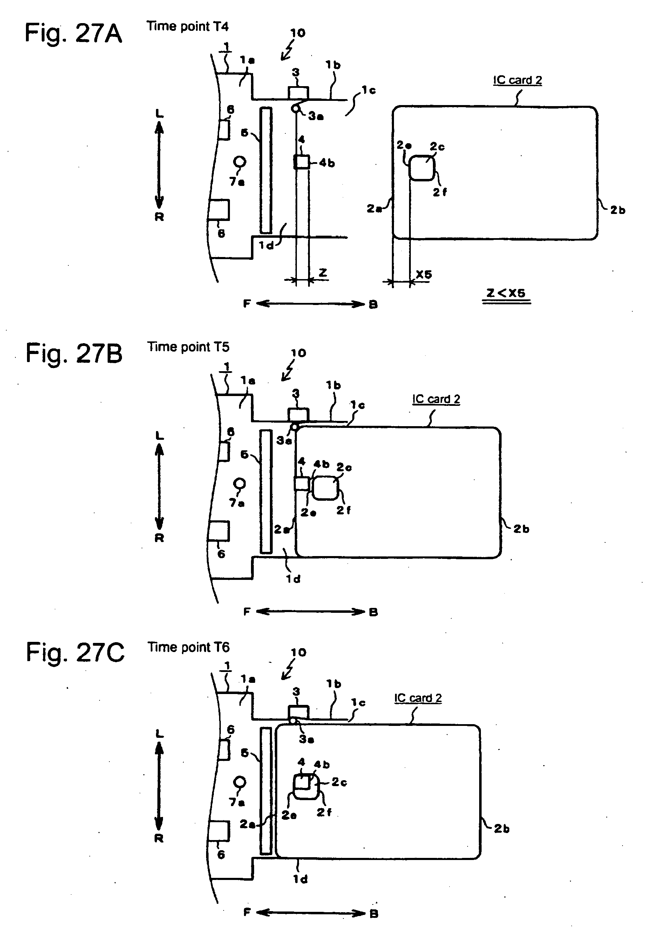

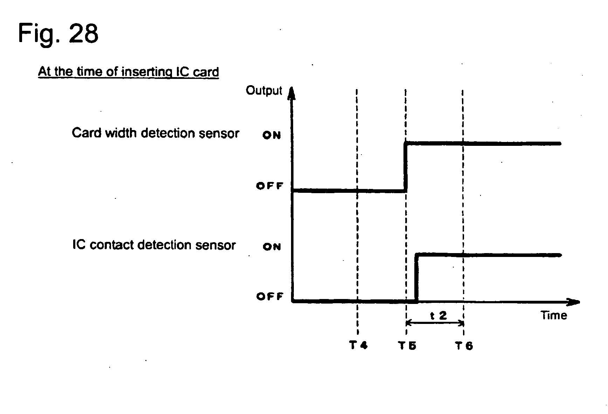

Fig. 27 and Fig. 28 are views representing a fifth embodiment of the present invention. It is to be noted that in Fig. 27 and Fig. 28 the same numerals are provided to the same portions as in above-described Fig. 1 to Fig. 3. In the present embodiment, as shown in Fig. 27A, the IC contact detection sensor 4 and the card width detection sensor 3 are disposed respectively on the front side and the back side of the insertion section 1b in the F direction of inserting the IC card 2. Further, the IC contact detection sensor 4 and the card width detection sensor 3 are provided in the insertion section 1b such that the interval Z between the actuator 3a of the card width detection sensor 3 and the B-direction-side end 4b of the IC contact detection sensor 4 in the F/B directions, is shorter than the distance X5 from the front end 2a of the IC card 2 to the front end 2e of the IC contact 2c (Z < X5).

Also when the IC contact detection sensor 4 and the card width detection sensor 3 are disposed in the insertion section 1b in the above-described manner, the determination processing of the IC card insertion (Step S1) in Fig. 5 is executed according to the flowchart in Fig. 21. For example, when the IC card 2 is inserted into the insertion slot 1c, as shown in Fig. 27A, each of the card width detection sensor 3 and the IC contact detection sensor 4 detects nothing at the time point T4 before the insertion of the IC card 2 and maintains the OFF state as shown in Fig. 28. When the IC card 2 is inserted into the insertion slot 1c in the F direction and the state of Fig. 27A is shifted to the state of the time point T5 shown in Fig. 27B, the actuator 3a is pushed by the IC card 2 in the L direction, and the card width detection sensor 3 detects the IC card 2 and shifts from the OFF state to the ON state as shown in Fig 28, thereby to output an ON signal to the control section 11. Therefore, with the card width detection sensor 3 having taken the ON state (Step S31 in Fig. 21: YES), the control section 11 confirms whether the IC contact detection sensor 4 has taken the OFF state or not (Step S32). At the time point T5, since the IC contact 2c on the IC card 2 is not positioned immediately below the IC contact detection sensor 4 as shown in Fig. 27B, the IC contact detection sensor 4 outputs an OFF signal to the control section 11 while maintaining the OFF state as shown in Fig. 28. With the IC contact detection sensor 4 having taken the OFF state (Step S32 in Fig. 21: YES), the control section 11 starts measuring the time with the above-described timer 13 (Step S33).

Subsequently, after a given time t2 has elapsed as measured with the timer 13 (Step S34: YES), the controlling section 11 stops the timer 13 (Step S35) and confirms whether or not the card width detection sensor 3 has taken the ON state and the IC contact detection sensor 4 has taken the ON state (Step S36). At the time point T6 when a given time t2 has elapsed from the time point T5, as shown in Fig. 27C, since the actuator 3a of the card width detection sensor 3 continues to be pushed in the L direction by the IC card 2, the card width detection sensor 3 outputs an ON signal to the control section 11 while maintaining the ON state as shown in Fig. 28. Further, since the IC contact on the IC card 2 has already been positioned immediately below the IC contact detection sensor 4 at the time point T6 as shown in Fig. 27C, the IC contact detection sensor 4 detected the front end 2e of the IC contact 2c and shifted from the OFF state to the ON state just after the time point T5 as shown in Fig. 28, thereby to output an ON signal to the control section 11 at the time point T6. Therefore, with the card width detection sensor 3 having taken the ON state and the IC contact detection sensor 4 having taken the ON state (Step S36 in Fig. 21: YES), the control section 11 determines that the IC card 2 has been inserted into the insertion slot 1c (Step S37), to complete the determination processing of the IC card insertion and the procedure is shifted to Step S2 in Fig. 5. After the procedure is shifted to Step S2 in Fig. 5, since the control section 11 has determined the insertion of the IC card by the determination processing of the IC card insertion as described above (Step S2: YES), the procedure is shifted to Step S3 and the solenoid 16 is driven to open the shutter 5. This releases the control over the entry of the IC card 2 into the body inside 1a and the IC card 2 is then inserted into the body inside 1a. Thereafter, each of Step S4 to Step S15 is executed in the same procedure as described above to complete the processing of the IC card 2.

As described above in the fifth embodiment, even in the case where the IC contact detection sensor 4 and the card width detection sensor 3 are disposed respectively on the front and back side as seen along the F direction at the interval Z therebetween, after the IC card 2 is inserted into the insertion slot 1c, the card width detection sensor 3 detects the IC card 2 at the timing of the time point T5 to take the ON state and then the IC contact detection sensor 4 detects the IC contact 2c on the IC card 2 at the timing just before the time point T6 to take the ON state, and hence it is possible to determine that the IC card 2 has been inserted into the insertion slot 1c. It should be noted that, in the case where the iron plate 51, the iron plate 52 or the non-compliant card 53 is inserted into the insertion slot 1c, as it is described in the fourth embodiment, the IC contact detection sensor 4 does not take the ON state at a slower timing than the card width detection sensor 3 even when the card width detection sensor 3 detects the IC card 2 to take the ON state, and consequently it is possible to determine that the IC card 2 has not been inserted into the insertion slot 1c.

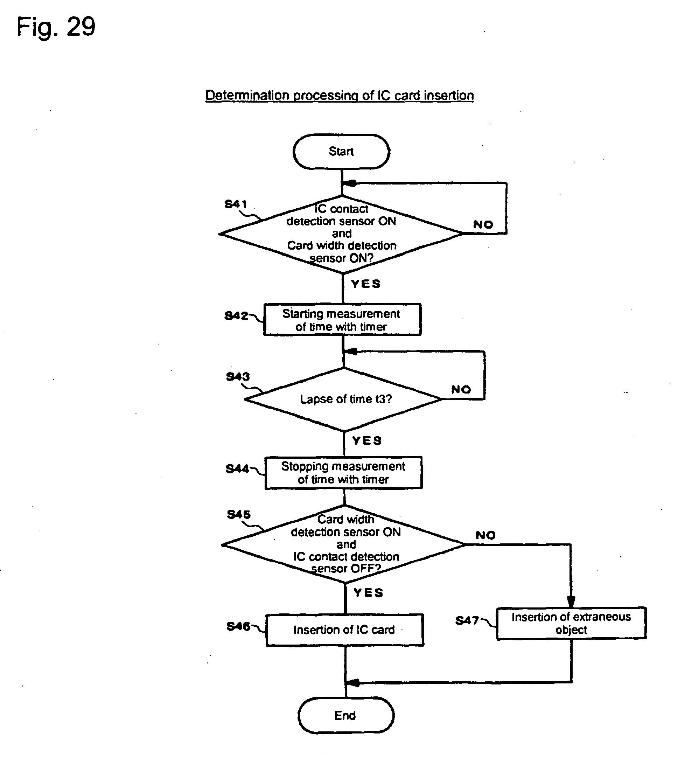

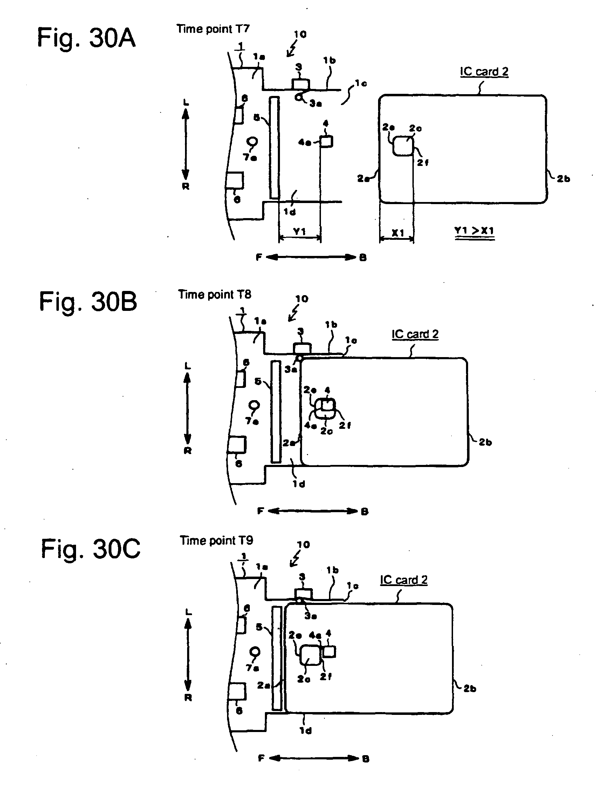

Fig. 29 to Fig. 31 are views representing a sixth embodiment of the present invention. It should be noted that in Fig. 30 the same numerals are provided to the same portions as in above-described Fig. 1 to Fig. 3. In the present embodiment, the determination processing of the IC card insertion (Step S1) is executed on the basis of the temporal variations in respective detecting states of the card width detection sensor 3 and the IC contact detection sensor 4 for determining whether the IC card 2 has been inserted or not, according to the flowchart in Fig. 2. Moreover, in the present embodiment, as shown in Fig. 30A, the IC contact detection sensor 4 is provided in such a position that the distance Y1 from the shutter 5 to the F-direction-side end 4a of the IC contact detection sensor 4 is longer than the distance X1 from the front end 2a of the IC card 2 to the back end 2f of the IC contact 2c (Y1 > X1).

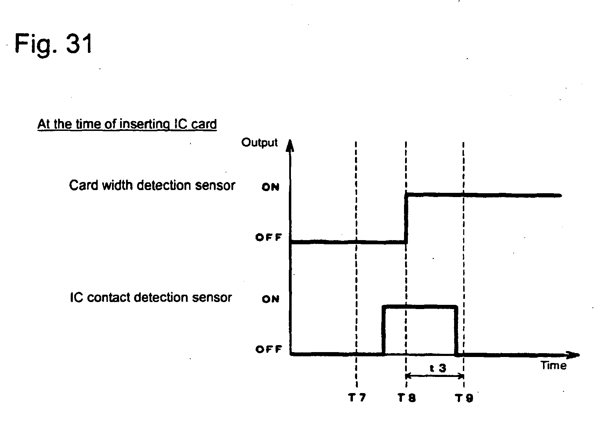

When the IC card 2 is inserted into the insertion slot 1c, as shown in Fig. 30A, each of the card width detection sensor 3 and the IC contact detection sensor 4 detects nothing at the time point T7 before the insertion of the IC card 2, and maintains the OFF state as shown in Fig. 31. When the IC card 2 is inserted into the insertion slot 1c in the F direction and the state of Fig. 30A is shifted to the state of the time point T8 shown in Fig. 30B, since the IC contact 2c on the IC card 2 has already been positioned immediately below the IC contact detection sensor 4, the IC contact detection sensor 4 detected the front end 2e of the IC contact 2c and shifted from the OFF state to the ON state before the time point T8 as shown in Fig. 31, thereby to output an ON signal to the control section 11 at the time point T8.
Further, since the actuator 3a of the card width detection sensor 3 is pushed in the L direction at the time point 8, as shown in Fig. 30B, the card width detection sensor 3 detects the IC card 2 and shifts from the OFF state to the ON state as shown in Fig. 31, thereby to output an ON signal to the control section 11. Therefore, with the IC contact detection sensor 4 having taken the OFF state and the card width detection sensor 3 having taken the ON state (Step S41 in Fig. 29: YES), the control section 11 starts measuring the time with the above-described timer 13 (Step S42).

Subsequently, after a given time t3 has elapsed as measured with the timer 13 (Step S43: YES), the controlling section 11 stops the timer 13 (Step S44) and confirms whether or not the card width detection sensor 3 has taken the ON state and the IC contact detection sensor 4 has taken the OFF state (Step S45). It is to be noted that the given time t3 is set to be shorter than the time that elapses between the insertion by a user of the IC card 2 from the insertion slot 1c at a prescribed speed and the striking of the front end 2a of the IC card 2 to the shutter 5. At the time point T9 when the given time t3 has elapsed from the time point T8, as shown in Fig. 30C, since the actuator 3a of the card width detection sensor 3 continues to be pushed in the L direction by the IC card 2, the card width detection sensor 3 outputs an ON signal to the control section 11 while maintaining the ON state as shown in Fig. 31. Further, since the IC contact 2c has already passed the position immediately below the IC contact detection sensor 4 at the time point T9 as shown in Fig. 30C, the IC contact detection sensor 4 detected the back end 2f of the IC contact 2c and shifted from the ON state to the OFF state just before the time point T9 as shown in Fig. 31, thereby to output an OFF signal to the control section 11 at the time point T9. Therefore, with the card width detection sensor 3 having taken the ON state and the IC contact detection sensor 4 having taken the OFF state (Step S45 in Fig. 29: YES), the control section 11 determines that the IC card 2 has been inserted into the insertion slot 1c (Step S46) to complete the determination processing of the IC card insertion and the procedure is shifted to Step S2 in Fig. 5. After the procedure is shifted to Step S2 in Fig. 5, since the control section 11 has determined the insertion of the IC card in the determination processing of the IC card insertion as described above (Step S2: YES), the procedure is shifted to Step S3 and the solenoid 16 is driven to open the shutter 5. This leads to a release of the control over the entry of the IC card 2 into the body inside 1a and the IC card 2 is inserted into the body inside 1a. Thereafter, each of Step S4 to Step S15 is executed in the same procedure as described above to complete the processing of the IC card 2.

As described above in the sixth embodiment, when the IC card 2 is inserted into the insertion slot 1c, the IC contact detection sensor 4 detects the IC contact 2c on the IC card 2 to take the ON state while the card width detection sensor 3 detects the IC card 2 to take the ON state, and then the IC contact detection sensor 4 has stopped detecting the IC contact 2c to take the OFF state while the card width detection sensor 3 maintains the ON state at the timing of the time point T9, whereby it is possible to determine that the IC card 2 has been inserted into the insertion slot 1c. It should be noted that, in the case where the aluminum plate 51 is inserted into the insertion slot 1c, the IC contact detection sensor 4 detects the aluminum plate 51 to take the ON state while the card width detection sensor 3 detects the aluminum plate 51 to take the ON state, and then the IC contact detection sensor 4 has not stopped detecting the aluminum plate 51 to take the OFF state while the card width detection sensor 3 maintains the ON state at the timing of the time point T9 (Step S45 in Fig. 29: NO), whereby it is possible to determine that an extraneous object has been inserted into the insertion slot 1c (Step S47). Further, when the iron plate 52 or the non-compliant card 53 is inserted into the insertion slot 1c, the card width detection sensor 3 detects the iron plate 52 or the non-compliant card 53 to take the ON state while the IC contact detection sensor 4 does not detect the iron plate 52 or the non-compliant card 53 and shows no sign of taking the ON state (Step S41: NO), and therefore the insertion of the IC card 2 into the insertion slot 1c is not determined.

In the above-described embodiments, the case of using the IC contact detection sensor 4 comprised of the frequency oscillation type proximity sensor as the IC contact detection device for detecting the presence or absence of the IC contact 2c on the IC card 2 is cited as an example, but the present invention is not limited thereto. Other than this, for example, the combination of a Hall element and a magnet, the combination of a magnetoresistive element and a magnet, a search coil, a magnetic inductance element, a magnetic impedance element and the like may be used.
An electromagnet may also be used as a magnet. Namely, the suitable IC contact detection device is capable of detecting a metal constituting the IC contact 2c on the IC card 2 in proximity to the insertion slot 1c.

Further, in the above-described embodiments, the case of using the card width detection sensor 3 comprised of the limited switch as the width detection device for detecting an object having a prescribed width is cited as an example, but the present invention is not limited thereto. Other than this, for example, a photo-interrupter or the like may be used. Namely, the suitable width detection device is capable of detecting an object having a prescribed width, such as the width W2 of the IC card 2, in proximity to the insertion slot 1c.

Moreover, in the above-described embodiments, the case of using the shutter 5 as the control device for controlling the entry of the IC card 2 having been inserted into the insertion slot 1c into the body inside 1a is cited as an example, but the present invention is not limited thereto. Other than this, for example, a stopper which protrudes to the passage 1d to block the passage 1d may be used. Rollers for carrying a card may be used which do not roll when the IC card 2 is not carried so as to prohibit passage of a card other than the IC card 2. Namely, the suitable control device is capable of controlling the entry of the IC card 2 or an extraneous object from the insertion slot 1c into the body inside 1a.

Additionally, in the second and third embodiments, the case of executing the determination processing of the IC card insertion (Step S1) in Fig. 5 according to the flowchart in Fig. 6 was described, but the present invention is not limited thereto; it can be executed according to the flowchart in Fig. 21 or the flowchart in Fig. 29 in place of the flowchart in Fig. 6.

Furthermore, in the above embodiments, the case of applying the present invention to the IC card processor 10 exclusively for the IC card 2 only comprising the IC contact 2c and the IC chip 2d is described, but the present invention can also be applied to a variety of IC card processors other than the IC card processor 10, such as an IC card processor capable of processing a hybrid IC card comprising an IC contact, an IC chip and a magnetic strip, and an IC card processor capable of processing a hybrid IC card comprising an IC contact, an IC chip and a non-contact IC chip.

## Claims

1. An IC card processor (10) comprising:
an insertion slot (16) into which an IC card comprising an IC contact can be inserted;
a control device (5) for controlling the entry of the IC card being inserted into the insertion slot into the body of the IC card processor; and
a reading/writing device (8) for reading or writing information by coming into contact with the IC contact (2c) on the IC card having entered the body of the IC card processor,
**characterized by**:
an IC contact detection device (4) for detecting the presence or absence of an IC contact (2c) in proximity to the insertion slot;
a determination device (11) for determining whether an IC card has been inserted into the insertion slot or not on the basis of temporal variations in detecting state of the IC contact detection device; and
a release device (11) for releasing control by the control device over entry of an IC card into the body of the IC card processor when the determination device determines that an IC card has been inserted.

2. The IC card processor according to claim 1, **characterized in that**
the determination device determines that an IC card has been inserted into the insertion slot in the case where the IC contact detection device shifts from an IC contact non-detecting state to an IC contact detecting state, and then shifts back to the non-detecting state.

3. The IC card processor according to claim 1, **characterized in that**
the IC card processor comprises a width detection device for detecting the presence or absence of an object having a prescribed width in proximity to the insertion slot, and
the determination device determines whether an IC card has been inserted into the insertion slot or not, on the basis of temporal variations in respective detecting states of the IC contact detection device and the width detection device.

4. The IC card processor according to claim 3, **characterized in that**
the IC contact detection device and the width detection device are disposed in an insertion section where the insertion slot is formed in the direction of inserting the IC card without an interval between the two devices, or the IC contact detection device and the width detection device are disposed respectively on the front side and the back side in the direction of inserting the IC card at an interval smaller than the distance from the front end of the IC card to the IC contact on the IC card in the direction of inserting the IC card; and
the determination device determines that an IC card has been inserted into the insertion slot in the case where the width detection device takes the state of detecting an object having a prescribed width, and then the IC contact detection device takes the IC contact detecting state.

5. The IC card processor according to claim 3, **characterized in that**
the determination device determines that an IC card has been inserted into the insertion slot in the case where the width detection device takes the state of detecting an object having a prescribed width while the IC contact detection device takes the IC contact detecting state, and then the IC contact detection device takes the IC contact non-detecting state while the width detection device maintains the state of detecting an object having a prescribed width.

6. The IC card processor according to claim 1 or 5,
**characterized in that**
the IC contact detection device is disposed in such a position as to detect the end of an IC contact which is most distant from the center line of an IC card parallel to the direction of inserting the IC card, when the IC card is inserted into the insertion slot in an orientation allowing the surface of the IC card with the IC contact appearing thereon to face the reading/writing device, and also in such a position as to detect the end of the IC contact which is least distant from the center line when the IC card is inserted into the insertion slot in an orientation allowing the rear surface of the IC card with the IC contact not appearing thereon to face the reading/writing device.

7. The IC card processor according to claim 1 or 6,
**characterized in that**
the IC contact detection device is disposed in such a position as to detect an IC contact when an IC card is inserted from the closer end thereof to the IC contact into the insertion slot, and also in such a position as not to detect the IC contact when the IC card is inserted from the farther end thereof to the IC contact into the insertion slot.

8. The IC card processor according to claim 1 or 7,
**characterized in that**
the IC contact detection device is disposed in such a position that the shortest distance to an IC contact is the range of detecting the IC contact when an IC card is inserted into the insertion slot in an orientation allowing the surface of the IC card with the IC contact appearing thereon to face the reading/writing device, and also in such a position that the shortest distance to the IC contact is out of the range of detecting the IC contact when the IC card is inserted into the insertion slot in an orientation allowing the rear surface of the IC card with the IC contact not appearing thereon to face the reading/writing device.

## Patentansprüche

1. IC-Karten-Prozessor (10) mit:
einem Einführungsschlitz (1c), in den eine IC-Karte mit einem IC-Kontakt eingeführt werden kann;
einer Steuervorrichtung (5) zum Steuern des Eintritts der IC-Karte, die in den Einführungsschlitz in das Gehäuse des IC-Karten-Prozessors eingeführt wird; und
einer Lese/Schreib-Vorrichtung (8) zum Lesen oder Schreiben von Informationen durch Inkontakttreten mit dem IC-Kontakt (2c) auf der IC-Karte, die in das Gehäuse des IC-Karten-Prozessors eingetreten ist,
**gekennzeichnet durch**:
eine IC-Kontakt-Erfassungsvorrichtung (4) zum Erfassen der Anwesenheit oder Abwesenheit eines IC-Kontakts (2c) in der Nähe des Einführungsschlitzes;
eine Feststellungsvorrichtung (11) zum Feststellen, ob eine IC-Karte in den Einführungsschlitz eingeführt wurde oder nicht, auf der Basis von zeitlichen Veränderungen des Erfassungszustandes der IC-Kontakt-Erfassungsvorrichtung; und
eine Freigabevorrichtung (11) zum Freigeben der Steuerung über den Eintritt einer IC-Karte in das Gehäuse des IC-Karten-Prozessors **durch** die Steuervorrichtung, wenn die Feststellungsvorrichtung feststellt, dass eine IC-Karte eingeführt wurde.

2. IC-Karten-Prozessor nach Anspruch 1, **dadurch gekennzeichnet, dass**
die Feststellungsvorrichtung feststellt, dass eine IC-Karte in den Einführungsschlitz eingeführt wurde, falls die IC-Kontakt-Erfassungsvorrichtung von einem IC-Kontakt-Nicht-Erfassungszustand in einen IC-Kontakt-Erfassungszustand umschaltet und dann wieder in den Nicht-Erfassungszustand umschaltet.

3. IC-Karten-Prozessor nach Anspruch 1, **dadurch gekennzeichnet, dass**
der IC-Karten-Prozessor eine Breitenerfassungsvorrichtung zum Erfassen der Anwesenheit oder Abwesenheit eines Objekts mit einer vorgeschriebenen Breite in der Nähe des Einführungsschlitzes aufweist, und
die Feststellungsvorrichtung auf der Basis von zeitlichen Veränderungen der jeweiligen Erfassungszustände der IC-Kontakt-Erfassungsvorrichtung und der Breitenerfassungsvorrichtung feststellt, ob eine IC-Karte in den Einführungsschlitz eingeführt wurde oder nicht.

4. IC-Karten-Prozessor nach Anspruch 3, **dadurch gekennzeichnet, dass**
die IC-Kontakt-Erfassungsvorrichtung und die Breitenerfassungsvorrichtung in einem Einführungsabschnitt, in dem der Einführungsschlitz ausgebildet ist, in der Richtung der Einführung der IC-Karte ohne Abstand zwischen den beiden Vorrichtungen angeordnet sind, oder die IC-Kontakt-Erfassungsvorrichtung und die Breitenerfassungsvorrichtung jeweils auf der Vorderseite und der Rückseite in der Richtung der Einführung der IC-Karte in einem Abstand, der kleiner ist als der Abstand vom Vorderende der IC-Karte zum IC-Kontakt auf der IC-Karte in der Richtung der Einführung der IC-Karte angeordnet sind; und
die Feststellungsvorrichtung feststellt, dass eine IC-Karte in den Einführungsschlitz eingeführt wurde, falls die Breitenerfassungsvorrichtung den Zustand der Erfassung eines Objekts mit einer vorgeschriebenen Breite annimmt und dann die IC-Kontakt-Erfassungsvorrichtung den IC-Kontakt-Erfassungszustand annimmt.

5. IC-Karten-Prozessor nach Anspruch 3, **dadurch gekennzeichnet, dass**
die Feststellungsvorrichtung feststellt, dass eine IC-Karte in den Einführungsschlitz eingeführt wurde, falls die Breitenerfassungsvorrichtung den Zustand der Erfassung eines Objekts mit einer vorgeschriebenen Breite annimmt, während die IC-Kontakt-Erfassungsvorrichtung den IC-Kontakt-Erfassungszustand annimmt, und dann die IC-Kontakt-Erfassungsvorrichtung den IC-Kontakt-Nicht-Erfassungszustand annimmt, während die Breitenerfassungsvorrichtung den Zustand der Erfassung eines Objekts mit einer vorgeschriebenen Breite aufrechterhält.

6. IC-Karten-Prozessor nach Anspruch 1 oder 5, **dadurch gekennzeichnet, dass**
die IC-Kontakt-Erfassungsvorrichtung in einer solchen Position angeordnet ist, dass sie das Ende eines IC-Kontakts erfasst, das von der Mittellinie einer IC-Karte, die zur Richtung der Einführung der IC-Karte parallel ist, am weitesten entfernt ist, wenn die IC-Karte in den Einführungsschlitz in einer Orientierung eingeführt wird, die ermöglicht, dass die Oberfläche der IC-Karte, auf der der IC-Kontakt erscheint, der Lese/Schreib-Vorrichtung zugewandt ist, und auch in einer solchen Position, dass sie das Ende des IC-Kontakts erfasst, das von der Mittellinie am geringsten entfernt ist, wenn die IC-Karte in den Einführungsschlitz in einer Orientierung eingeführt ist, die ermöglicht, dass die hintere Oberfläche der IC-Karte, auf der der IC-Kontakt nicht erscheint, der Lese/SchreibVorrichtung zugewandt ist.

7. IC-Karten-Prozessor nach Anspruch 1 oder 6, **dadurch gekennzeichnet, dass**
die IC-Kontakt-Erfassungsvorrichtung in einer solchen Position angeordnet ist, dass sie einen IC-Kontakt erfasst, wenn eine IC-Karte von deren näherem Ende zum IC-Kontakt in den Einführungsschlitz eingeführt wird, und auch in einer solchen Position, dass sie den IC-Kontakt nicht erfasst, wenn die IC-Karte von deren fernerem Ende zum IC-Kontakt in den Einführungsschlitz eingeführt wird.

8. IC-Karten-Prozessor nach Anspruch 1 oder 7, **dadurch gekennzeichnet, dass**
die IC-Kontakt-Erfassungsvorrichtung in einer solchen Position angeordnet ist, dass der kürzeste Abstand zu einem IC-Kontakt die Erfassungsreichweite des IC-Kontakts ist, wenn eine IC-Karte in den Einführungsschlitz in einer Orientierung eingeführt wird, die ermöglicht, dass die Oberfläche der IC-Karte, auf der der IC-Kontakt erscheint, der Lese/Schreib-Vorrichtung zugewandt ist, und auch in einer solchen Position, dass der kürzeste Abstand zum IC-Kontakt außerhalb der Erfassungsreichweite des IC-Kontakts liegt, wenn die IC-Karte in den Einführungsschlitz in einer Orientierung eingeführt wird, die ermöglicht, dass die hintere Oberfläche der IC-Karte, auf der der IC-Kontakt nicht erscheint, der Lese/Schreib-Vorrichtung zugewandt ist.

## Revendications

1. Processeur pour carte à puce (10) comprenant :
une fente d'insertion (1c), dans laquelle une carte à puce comprenant un contact de circuit intégré peut être insérée ;
un dispositif de contrôle pour contrôler l'entrée de la carte à puce en cours d'insertion dans la fente d'insertion à l'intérieur du corps du processeur pour carte à puce ; et
un dispositif de lecture / d'écriture (8) pour lire ou écrire de l'information en entrant en contact avec le contact de circuit intégré (2c) sur la carte à puce, qui est entrée dans le corps du processeur pour carte à puce,
**caractérisé par** :
un dispositif de détection de contact de circuit intégré (4) pour détecter la présence ou l'absence d'un contact de circuit intégré (2c) à proximité de la fente d' insertion ;
un dispositif de détermination (11) pour déterminer si une carte à puce a été insérée dans la fente d'insertion ou non, sur la base de variations temporelles de l'état de détection du dispositif de détection de contact de circuit intégré ; et
un dispositif de relâche (11) pour relâcher le contrôle, par le dispositif de contrôle, de l'entrée d'une carte à puce à l'intérieur du corps du processeur pour carte à puce, lorsque le dispositif de détermination détermine qu'une carte à puce a été insérée.

2. Processeur pour carte à puce selon la revendication 1, **caractérisé en ce que**
le dispositif de détermination détermine qu'une carte à puce a été insérée dans la fente d'insertion, lorsque le dispositif de détection de contact de circuit intégré change d'un état de non - détection de contact de circuit intégré à un état de détection de contact de circuit intégré, puis retourne à l'état de non - détection.

3. Processeur pour carte à puce selon la revendication 1, **caractérisé en ce que**
le processeur pour carte à puce comprend un dispositif de détection d'épaisseur, pour détecter la présence ou l'absence d'un objet possédant une épaisseur prescrite à proximité de la fente d'insertion, et
le dispositif de détermination détermine si une carte à puce a été insérée dans la fente d'insertion ou non, sur la base de variations temporelles des états de détection respectifs du dispositif de détection de contact de circuit intégré et du dispositif de détection d'épaisseur.

4. Processeur pour carte à puce selon la revendication 3, **caractérisé en ce que**
le dispositif de détection de contact de circuit intégré et le dispositif de détection d'épaisseur sont disposés dans une section d'insertion, au niveau de laquelle la fente d'insertion est formée dans la direction d'insertion de la carte à puce sans intervalle entre les deux dispositifs, ou le dispositif de détection de contact de circuit intégré et le dispositif de détection d'épaisseur sont respectivement disposés sur le côté avant et le côté arrière dans la direction d'insertion de la carte à puce, avec un intervalle inférieur à la distance entre l'extrémité avant de la carte à puce et le contact de circuit intégré sur la carte à puce dans la direction d'insertion de la carte puce ; et
le dispositif de détermination détermine qu'une carte à puce a été insérée dans la fente d'insertion, lorsque le dispositif de détection d'épaisseur assume l'état de détection d'un objet possédant une épaisseur prescrite puis le dispositif de détection de contact de circuit intégré assume l'état de détection de contact de circuit intégré.

5. Processeur pour carte à puce selon la revendication 3, **caractérisé en ce que**
le dispositif de détermination détermine qu'une carte à puce a été insérée dans la fente d'insertion, lorsque le dispositif de détection assume l'état de détection d'un objet possédant une épaisseur prescrite pendant que le dispositif de détection de contact de circuit intégré assume l'état de détection de contact de circuit intégré, puis le dispositif de détection de contact de circuit intégré assume l'état de non - détection de contact de circuit intégré pendant que le dispositif de détection d'épaisseur maintient un état de détection d'un objet possédant une épaisseur prescrite.

6. Processeur pour carte à puce selon la revendication 1 ou 5, **caractérisé en ce que**
le dispositif de détection de contact de circuit intégré est disposé dans une position telle qu'il détecte l'extrémité d'un contact de circuit intégré, qui est le plus distant par rapport à la ligne médiane d'une carte à puce qui est parallèle à la direction d'insertion de la carte puce, lorsque la carte à puce est insérée dans la fente d'insertion selon une orientation qui permet à la surface de la carte à puce dotée du contact de circuit intégré de faire face au dispositif de lecture / d'écriture, et également dans une position telle qu'il détecte l'extrémité du contact de circuit intégré qui est le moins distant par rapport à la ligne médiane, lorsque la carte à puce est insérée dans la fente d'insertion selon une orientation qui permet à la surface de la carte à puce n'étant pas dotée du contact de circuit intégré de faire face au dispositif de lecture / d'écriture.

7. Processeur pour carte à puce selon la revendication 1 ou 6, **caractérisé en ce que**
le dispositif de détection de contact de circuit intégré est disposé dans une position telle qu'il détecte un contact de circuit intégré lorsqu'une carte à puce est insérée dans la fente d'insertion depuis l'extrémité du dispositif la plus proche vis - à - vis du contact de circuit intégré, et également dans une position telle qu'il ne détecte pas le contact de circuit intégré lorsqu'une carte à puce est insérée dans la fente d'insertion depuis l'extrémité du dispositif la plus distante vis-à-vis du contact de circuit intégré.

8. Processeur pour carte à puce selon la revendication 1 ou 7, **caractérisé en ce que**
le dispositif de détection de contact de circuit intégré est disposé dans une position telle que la distance la plus courte jusqu'à un contact de circuit intégré soit la gamme de détection du contact de circuit intégré, lorsqu'une carte à puce est insérée dans la fente d'insertion selon une orientation qui permet à la surface de la carte à puce dotée du contact de circuit intégré de faire face au dispositif de lecture / d'écriture, et également dans une position telle que la distance la plus courte jusqu'au contact de circuit intégré soit hors de la gamme de détection du contact de circuit intégré, lorsque la carte à puce est insérée dans la fente d'insertion selon une orientation qui permet à la surface arrière de la carte à puce, qui n'est pas dotée du contact de circuit intégré, de faire face au dispositif de lecture / d'écriture.
